# EUROPÄISCHE PATENTSCHRIFT

(11) **EP 3 992 038 B1**
(45) Veröffentlichungstag und Bekanntmachung des Hinweises auf die Patenterteilung: **04.12.2024**
(21) Anmeldenummer: 21206143.6
(22) Anmeldetag: 03.11.2021
(51) Int. Cl.: B60R 25/0215

(54) **VORRICHTUNG ZUM SPERREN UND FREIGEBEN EINES FUNKTIONSWESENTLICHEN BAUTEILS EINES KRAFTFAHRZEUGES**
DEVICE FOR LOCKING AND UNLOCKING AN ESSENTIAL COMPONENT OF A MOTOR VEHICLE
DISPOSITIF DE BLOCAGE ET DÉBLOCAGE D'UN COMPOSANT ESSENTIEL AU FONCTIONNEMENT D'UN VÉHICULE AUTOMOBILE

(30) Priorität: 03.11.2020 DE 102020128901
(43) Veröffentlichungstag der Anmeldung: 04.05.2022
(73) Patentinhaber: HUF Hülsbeck & Fürst GmbH & Co. KG, 42551 Velbert (DE)
(72) Erfinder: Trischberger, Werner, 85229 Langenpettenbach / Markt Indersdorf (DE)
(74) Vertreter: Bals & Vogel Patentanwälte PartGmbB

(56) Entgegenhaltungen:
- EP-A1- 2 070 781
- EP-A1- 3 392 095
- WO-A1-2018/206546

## Beschreibung

Die Erfindung betrifft eine Vorrichtung zum Sperren und Freigeben eines funktionswesentlichen Bauteils eines Kraftfahrzeugs, bspw. einer Lenksäule oder eines Gangschalthebels, nach dem Oberbegriff des unabhängigen Vorrichtungsanspruches und ein Verfahren zum Antreiben einer solchen Vorrichtung nach dem Oberbegriff des unabhängigen Verfahrensanspruches.

Vorrichtungen zum Sperren und Freigeben von funktionswesentlichen Bauteilen, wie z. B. Lenksäulen oder Gangschalthebeln, in Kraftfahrzeugen sind grundsätzlich bekannt. Solche Vorrichtungen weisen meistens einen Sperrbolzen auf, der in einem Gehäuse bewegbar gelagert ist. Zum einen kann der Sperrbolzen in einer Verriegelungsposition aus einer Öffnung im Gehäuse herausfahren und das funktionswesentliche Bauteil durch einen Eingriff in eine korrespondierende Aufnahme in diesem Bauteil, z. B. eine Zahnlücke zwischen zwei Zähnen in einem Zahnradkranz, sperren. Zum anderen kann der Sperrbolzen eine Entriegelungsposition einnehmen, bei der der Sperrbolzen weitestgehend innerhalb des Gehäuses aufgenommen ist und das funktionswesentliche Bauteil freigibt. Oft weisen solche Vorrichtungen Detektionseinheiten auf, um mindestens eine Position des Sperrbolzens exakt zu detektieren. Es hat sich nachteiligerweise gezeigt, dass es bei einer Fehlstellung des funktionswesentlichen Bauteils dazu kommen kann, dass der Sperrbolzen nicht die Verriegelungsposition einnehmen kann, da es beim Austritt aus dem Gehäuse nicht in die korrespondierende Aufnahme im funktionswesentlichen Bauteil, sondern z. B. auf einen Zahn des Zahnradkranzes, trifft. Befindet sich das Kraftfahrzeug in einem derartigen Zustand, in dem der Sperrbolzen zwar seine Entriegelungsposition verlassen hat, jedoch die Verriegelungsposition nicht erreicht hat, kann er unberechtigterweise durch Manipulationen von außen, bspw. durch Magneten oder durch gezielte Prellschläge am Gehäuse, wieder in seine Entriegelungsstellung gebracht werden.

WO2018/206546 A1 offenbart eine Verriegelungseinrichtung.

Es ist daher Aufgabe der vorliegenden Erfindung, eine Vorrichtung zum Sperren und Freigeben eines funktionswesentlichen Bauteils eines Kraftfahrzeugs, bspw. einer Lenksäule oder eines Gangschalthebels, zu verbessern, bei der die oben genannten Nachteile zumindest zu einem Teil überwunden werden können. Insbesondere ist es Aufgabe der Erfindung, eine Vorrichtung zum Sperren und Freigeben eines funktionswesentlichen Bauteils eines Kraftfahrzeugs bereitzustellen, die einfach aufgebaut ist, die leicht zu montieren ist, die zuverlässig und sicher im Betrieb, und die den Sperrbolzen in seiner Position sichert, beispielsweise auch obwohl eine Fehlstellung des funktionswesentlichen Bauteils vorliegt. Zudem ist es Aufgabe der Erfindung ein entsprechendes Verfahren zum Antreiben einer solchen Vorrichtung bereitzustellen.

Die vorliegende Aufgabe wird durch eine Vorrichtung mit den Merkmalen des unabhängigen Vorrichtungsanspruchs, insbesondere aus dem kennzeichnenden Teil, gelöst. Ferner wird die erfindungsgemäße Aufgabe durch ein Verfahren zum Antreiben einer Vorrichtung zum Sperren und Freigeben eines funktionswesentlichen Bauteils eines Kraftfahrzeugs mit den Merkmalen des unabhängigen Verfahrensanspruchs, insbesondere aus dem kennzeichnenden Teil, vorgeschlagen. In den abhängigen Vorrichtungs- und Verfahrensansprüchen sind bevorzugte Weiterbildungen der Erfindung aufgeführt. Merkmale, die zu den einzelnen Ausführungsformen der erfindungsgemäßen Vorrichtung und des erfindungsgemäßen Verfahrens offenbart werden, können in der Weise miteinander kombiniert werden, dass bezüglich der Offenbarung zu den Ausführungsformen der erfindungsgemäßen Vorrichtung und des erfindungsgemäßen Verfahrens stets wechselseitig Bezug genommen wird bzw. werden kann.

Die Erfindung stellt zum einen bereit: eine Vorrichtung zum Sperren und Freigeben eines funktionswesentlichen Bauteils eines Kraftfahrzeuges, insbesondere einer Lenksäule oder eines Gangschalthebels, die ebenfalls als eine Sperrvorrichtung oder ein Lenkradschloss bzw. Gangschalthebelschloss bezeichnet werden kann. Die Vorrichtung weist dabei folgende Elemente auf:
- ein Gehäuse, in welchem:
- ein Sperrbolzen zwischen einer Verriegelungsposition, in welcher der Sperrbolzen mit dem funktionswesentlichen Bauteil in Eingriff bringbar ist, und einer Entriegelungsposition, in welcher der Sperrbolzen das funktionswesentliche Bauteil freigibt, bewegbar gelagert ist,
- ein Getriebe,
   welches mit dem Sperrbolzen in einer mechanischen Wirkverbindung steht,
   um den Sperrbolzen zwischen der Verriegelungsposition und der Entriegelungsposition zu überführen,
- und eine Detektionseinheit,
   welche einen Steuerhebel zum Bewegen eines Signalgebers und
   mindestens ein erstes ortsfestes Sensorelement zum Detektieren mindestens einer Stellung des Steuerhebels aufweist,

wobei der Steuerhebel in dem Gehäuse zwischen einer Funktionsstellung, in welcher sich der Signalgeber beabstandet vom ersten Sensorelement befindet, und einer Detektionsstellung, in welcher sich der Signalgeber im Detektionsbereich des ersten Sensorelementes befindet, bewegbar gelagert ist,
und wobei das Getriebe mit dem Steuerhebel in einer mechanischen Wirkverbindung steht, um den Steuerhebel zwischen der Funktionsstellung und der Detektionsstellung zu überführen.

Hierzu sieht die Erfindung vor, dass der Steuerhebel einen Sicherungsschenkel aufweist, der dazu ausgeführt ist, in der Funktionsstellung des Steuerhebels eine unberechtigte Überführung des Sperrbolzens in die Entriegelungsposition (bspw. durch äußere Einwirkungen am Gehäuse, z. B. durch Magnete oder durch gezielte (mechanische) Schläge), insbesondere durch einen Form- und/oder Kraftschluss mit dem Sperrbolzen, zu verhindern.

Im Rahmen der Erfindung wird eine Vorrichtung zum Sperren und Freigeben eines funktionswesentlichen Bauteils eines Kraftfahrzeuges, insbesondere einer Lenksäule oder eines Gangschalthebels, bereitgestellt, welche mithilfe eines, vorzugsweise längsverschieblichen, Steuerhebels mindestens zwei Funktionalitäten zur Verfügung stellt.

Eine Funktionalität des Steuerhebels ist die Detektion. Hierzu trägt der Steuerhebel einen Signalgeber, bspw. mindestens einen Magneten, welcher mit dem Steuerhebel hin und her verschiebbar ist. Die Erkennung mithilfe zugehöriger Sensorelemente erlaubt es, die Stellung des Steuerhebels und damit indirekt auch die Position des Sperrbolzens zu bestimmen.

Eine weitere Funktionalität des Steuerhebels ist die mechanische Absicherung des Sperrbolzens, insbesondere gegen ein unbefugtes Überführen in die Entriegelungsposition, bspw. durch Magnete oder durch Schläge am Gehäuse. Um das Gehäuse besonders stabil auszugestalten, kann dieses zumindest ein Gußteil, vorzugsweise aus Aluminiumdruckguss, insbesondere ZAMAK aufweisen. In Situationen, in denen der Sperrbolzen die Verriegelungsposition nicht einnehmen kann, bspw. aufgrund einer Fehlstellung des funktionswesentlichen Bauteils, in der der Sperrbolzen in eine korrespondierende Aufnahme am funktionswesentlichen Bauteil nicht eingreifen kann, verbleibt der Sperrbolzen in einer Zwischenposition. Die Zwischenposition kann kurz vor dem Erreichen der Verriegelungsposition liegen. In solchen Situationen sichert der Sicherungsschenkel des Steuerhebels in der Funktionsstellung des Steuerhebels den Sperrbolzen von oben ab, um eine unberechtigte Überführung des Sperrbolzens in die Entriegelungsposition zu verhindern. Der Sicherungsschenkel des Steuerhebels kann in der Funktionsstellung des Steuerhebels am Sperrbolzen in der Zwischenposition anliegen, um insbesondere einen Formschluss mit einer Entsprechenden Auflagefläche am Sperrbolzen zu bilden. Zudem kann der Sicherungsschenkel des Steuerhebels in der Funktionsstellung des Steuerhebels den Sperrbolzen nach unten in die Verriegelungsposition federelastisch beaufschlagen, um vorzugsweise einen Form- und Kraftschluss mit dem Sperrbolzen zu bilden. Vorteilhafterweise kann der Steuerhebel von der Funktionsstellung in die Detektionsstellung mit einer Federkraft beaufschlagt sein, sodass in der Funktionsstellung des Steuerhebels der Sicherungsschenkel des Steuerhebels die Federkraft auf den Sperrbolzen übertragen kann, um diesen nach unten zu drücken. Auf diese Weise kann der Sicherungsschenkel des Steuerhebels in der Funktionsstellung des Steuerhebels den Sperrbolzen in der Zwischenposition nach unten in die Verriegelungsstellung federelastisch beaufschlagen. Auch, wenn der Sperrbolzen die Verriegelungsposition erreicht hat, befindet sich der Sicherungsschenkel des Steuerhebels über dem Sperrbolzen und sichert den Sperrbolzen gegen ein unbefugtes Überführen in die Entriegelungsposition ab, indem es den Weg nach oben in die Entriegelungsposition absperrt. Auf diese Weise kann die Erfindung ermöglichen, dass keine mechanischen Einwirkungen von außen, die unberechtigterweise erfolgen, den Sperrbozen noch oben bewegen können.

Im Rahmen der Funktionalität des Steuerhebels zur mechanischen Absicherung des Sperrbolzens kann weiterhin vorgesehen sein, dass der Steuerhebel in der Detektionsstellung den Sperrbolzen in seiner Entriegelungsposition halten kann, bspw. durch ein mechanisches Einrasten in einer korrespondierenden Ausnehmung am Sperrbolzen.

Das Getriebe kann im Rahmen der erfindungsgemäßen Vorrichtung eine als eine Zwangsführung ausgebildete Führungskulisse aufweisen, um den Steuerhebel zwischen der Funktionsstellung zum Absichern des Sperrbolzens und der Detektionsstellung zum Eingriff mit dem Sperrbolzen zu verschieben.

Ferner ist vorgesehen, dass der Sicherungsschenkel einen Arretierabschnitt aufweist, wobei der Arretierabschnitt in der Detektionsstellung des Steuerhebels sich beabstandet vom Sperrbolzen befindet und wobei der Arretierabschnitt in der Funktionsstellung des Steuerhebels den Sperrbolzen in der Verriegelungsposition gegen ein Überführen in die Entriegelungsposition absichert und den Sperrbolzen in einer Zwischenposition, die zwischen der Verriegelungsposition und der Entriegelungsposition kurz vor dem Erreichen der Verriegelungsposition liegt, form- und/oder kraftschlüssig arretiert. Auf diese Weise kann eine zuverlässige Zurückhaltung des Sperrbolzens bewirkt werden, um eine unberechtigte Überführung des Sperrbolzens in die Entriegelungsposition zu verhindern.

Weiterhin kann bei einer Vorrichtung vorgesehen sein, dass der Arretierabschnitt eine, insbesondere in Richtung zum Steuerhebel, abstehende Nase aufweist. Vorzugsweise kann der Arretierabschnitt in der Funktionsstellung des Steuerhebels von oben an einer Auflagefläche am Sperrbolzen, vorzugsweise flächig, zur Auflage gebracht werden, um den Sperrbolzen in der Zwischenposition in die Verriegelungsposition form- und/oder kraftschlüssig zu arretieren und/oder um ein gewaltsames Überführen des Sperrbolzens aus der Verriegelungsposition und/oder aus der Zwischenposition in die Entriegelungsposition zu verhindern. Zudem kann vorgesehen sein, dass der Sperrbolzen eine, insbesondere abgesenkte, Auflagefläche für den Arretierabschnitt aufweist. Vorteilhafterweise können der Arretierabschnitt des Sicherungsschenkels und der korrespondierenden Auflagefläche am Sperrbolzen einen Form- und/oder Kraftschluss zum Absichern des Sperrbolzens gegen unberechtigte Manipulationen von außen bilden, wenn der Sperrbolzen in der Zwischenposition verblieben ist. Wenn der Sperrbolzen die Verriegelungsposition erreicht hat, liegt der Arretierabschnitt des Sicherungsschenkels über der Auflagefläche am Sperrbolzen und versperrt dem Sperrbolzen den Weg nach oben in die Entriegelungsposition. Somit kann eine einfache und wirksame Funktionalität des Steuerhebels für die mechanische Absicherung des Sperrbolzens gegen ein unbefugtes Überführen in die Entriegelungsposition bewirkt werden. Vorteilhafterweis kann der Sperrbolzen somit in jeder Position zwischen der Verriegelungsposition und der Zwischenposition gegen unberechtigte Manipulationen von außen abgesichert sein.

Des Weiteren kann bei einer Vorrichtung vorgesehen sein, dass der Sicherungsschenkel als eine Verlängerung des Steuerhebels ausgeführt ist. Ferner können der Sicherungsschenkel und der Steuerhebel materialeinheitlich, monolithisch und/oder einstückig ausgeführt sein. Außerdem können der Sicherungsschenkel und der Steuerhebel aus einem Kunststoff, insbesondere Duroplast, ausgeführt sein. Auf diese Weise kann ein einfacher und kostengünstiger Steuerhebel mit einer erweiterten Funktionalität bereitgestellt werden.

Zudem kann bei einer Vorrichtung vorgesehen sein, dass der Sicherungsschenkel und der Steuerhebel ein U-förmiges Bauteil bilden. Dabei kann sich der Sicherungsschenkel im Wesentlichen parallel zum Steuerhebel erstrecken. Ferner ist es denkbar, dass der Arretierabschnitt vom Sicherungsschenkel in Richtung zum Steuerhebel absteht.

Vorteilhafterweise können der Sicherungsschenkel und der Steuerhebel zumindest in der Verriegelungsposition des Sperrbolzens den Sperrbolzen beidseitig umschließen. Auf diese Weise kann sichergestellt werden, dass der Steuerhebel den Sperrbolzen sowohl in der Verriegelungsposition des Sperrbolzens absichern, als auch in der Entriegelungsposition des Sperrbolzens halten kann. Hierzu kann der Steuerhebel senkrecht zur Erstreckungsrichtung und/oder Hubrichtung des Sperrbolzens bewegt werden. In der Verriegelungsposition des Sperrbolzens kann der Sicherungsschenkel des Steuerhebels von einer Seite und in der Entriegelungsposition des Sperrbolzens kann ein Führungsabschnitt des Steuerhebels von der anderen Seite des Sperrbolzens zum Sperrbolzen bewegt werden, um entsprechende Funktionalität bzw. mechanische Absicherung sicherzustellen.

Außerdem kann bei einer Vorrichtung ein erstes Federelement vorgesehen sein, um den Sperrbolzen mit einer ersten Federkraft aus der Entriegelungsposition in die Verriegelungsposition zu beaufschlagen. Somit kann der Sperrbolzen mithilfe der ersten Federkraft nicht nur sicher von der Entriegelungsposition in die Verriegelungsposition überführt werden, sondern auch in der Zwischenposition dazu tendieren, in eine korrespondierende Aufnahme am funktionswesentlichen Bauteil (d. h. in die Verriegelungsposition) zu fallen, wenn das funktionswesentliche Bauteil aus der Fehlstellung leicht bewegt wird.

Darüber hinaus kann bei einer Vorrichtung ein zweites Federelement vorgesehen sein, um den Steuerhebel mit einer zweiten Federkraft aus der Funktionsstellung in die Detektionsstellung zu beaufschlagen. Für eine sichere Übertragung der zweiten Federkraft kann das Federelement in einer ersten Führung im Gehäuse der Vorrichtung angeordnet sein. Dabei ist es denkbar, dass das Federelement zwischen einem Federhalter am Steuerhebel und einem Anschlag in und/oder an einer ersten Führung im Gehäuse der Vorrichtung angeordnet ist und verspannt werden kann. Der Federhalter am Steuerhebel kann außerdem zum Stabilisieren der Bewegung des Steuerhebels dienen. Mithilfe der zweiten Federkraft kann die Überführung des Steuerhebels aus der Funktionsstellung in die Detektionsstellung unterstützt werden. Wenn das Getriebe mit dem Steuerhebel fehlerfrei mechanisch wechselwirken, so stellt das Federelement an sich eine redundante Maßnahme dar. Sollte jedoch das Schieberelement die mechanische Verbindung zum Getriebe verlieren, so sorgt das Federelement dazu, dass das Schieberelement trotz mechanischer Unterbrechungen in der Antriebskette seine Detektionsstellung sicher erreicht. Auch kann das Federelement dazu dienen, die zweite Federkraft über den Sicherungsschenkel des Steuerhebels in der Funktionsstellung an den Sperrbolzen in der Zwischenposition zu übertragen.

Ferner kann bei einer Vorrichtung vorgesehen sein, dass der Steuerhebel translatorisch, vorzugsweise entlang einer Richtung, die sich im Wesentlichen quer zu einer Hubrichtung des Sperrbolzens erstreckt, bewegbar gelagert ist. Durch die translatorische Bewegung kann der Steuerhebel stabil angetrieben werden. Quer zur Hubrichtung des Sperrbolzens lässt sich eine zuverlässige Arretierung des Sperrbolzens in der Entriegelungsposition und ein sicherer Halt des Sperrbolzens in der Entriegelungsposition erreichen. Zudem kann durch eine translatorische Bewegung des Sperrbolzens entlang der Hubrichtung und des Steuerhebels quer zur Hubrichtung die entsprechenden Positionen des Sperrbolzens und die korrespondierenden Stellungen des Steuerhebels einfach aufeinander abgestimmt werden.

Weiterhin kann bei einer Vorrichtung vorgesehen sein, dass der Steuerhebel, insbesondere ein Federhalter des Steuerhebels, entlang einer ersten Führung im Gehäuse der Vorrichtung bewegbar gelagert ist. Zudem ist es denkbar, dass der Sicherungsschenkel, insbesondere ein Schenkelfuß des Sicherungsschenkels, entlang einer zweiten Führung im Gehäuse der Vorrichtung bewegbar gelagert ist. Somit kann die Bewegung des Steuerhebels und des Sicherungsschenkels stabilisiert und eine sichere Funktionsweise des Steuerhebels sichergestellt werden.

Des Weiteren kann bei einer Vorrichtung vorgesehen sein, dass der Steuerhebel einen Führungsabschnitt aufweist, der dazu ausgeführt ist, den Steuerhebel bei der Bewegung zwischen der Funktionsstellung und der Detektionsstellung zu stabilisieren und/oder den Sperrbolzen in der Entriegelungsposition form- und/oder kraftschlüssig abzusichern. Auf diese Weise kann die Funktionalität des Steuerhebels auf eine vorteilhafte Weise erweitert werden.

Zudem kann bei einer Vorrichtung vorgesehen sein, dass der Führungsabschnitt ein Sicherungselement aufweist, der in der Funktionsstellung des Steuerhebels sich beabstandet vom Sperrbolzen befindet und in der Detektionsstellung des Steuerhebels in eine korrespondierende Halteausnehmung am Sperrbolzen form- und/oder kraftschlüssig eingreift. Auf diese Weise kann der Sperrbolzen in der Entriegelungsposition abgesichert werden, um bspw. ein ungewolltes Zurückfallen des Sperrbolzens in die Verriegelungsposition bei einem laufenden Betrieb des Fahrzeuges zu verhindern. Die Entriegelungsposition des Sperrbolzens entspricht der Detektionsstellung des Steuerhebels. Der Steuerhebel dient somit in der Detektionsstellung zum Detektieren und zum Halten der Entriegelungsposition des Sperrbolzens.

Außerdem kann bei einer Vorrichtung vorgesehen sein, dass der Führungsabschnitt einen Führungspin aufweist, der in eine, vorzugsweise spiralförmig um eine Drehachse des Getriebes ausgebildete, Führungskulisse an einem Antriebsrad des Getriebes eingreift, um den Steuerhebel zwischen der Funktionsstellung und der Detektionsstellung, zu überführen. Auf diese Weise kann eine Wirkverbindung zwischen dem Steuerhebel und dem Getriebe hergestellt werden.

Zudem kann bei einer Vorrichtung vorgesehen sein, dass der Führungspin des Steuerhebels mindestens eine Fangnase, vorzugsweise zwei abgewickelte Fangnasen, aufweist, die radial, vorzugsweise in entgegengesetzte Richtungen, vom Führungspin absteht bzw. abstehen, um die Überführung des Führungspins des Steuerhebels entlang der Führungskulisse zu unterstützen. Somit kann eine zuverlässige Wechselwirkung zwischen der Führungskulisse und dem Führungspin des Steuerhebels ermöglicht werden. Die Fangnase bzw. die Fangnasen können dafür sorgen, eine gleichmäßige, ruckfreie Bewegung des Führungspins des Steuerhebels entlang der Führungskulisse zu ermöglichen.

Ferner kann bei einer Vorrichtung vorgesehen sein, dass der Führungsabschnitt in einer dritten Führung im Gehäuse der Vorrichtung bewegbar gelagert ist. Auf diese Weise kann die Bewegung des Führungsabschnittes und somit des ganzen Steuerhebels stabilisiert werden.

Weiterhin ist es denkbar, dass der Führungsabschnitt plateauförmig und/oder massiv ausgeführt ist. Somit kann an dem Führungsabschnitt eine zuverlässige Kraftübertragung zwischen dem Getriebe und dem Steuerhebel beim Antreiben des Steuerhebels ermöglicht werden.

Des Weiteren ist es denkbar, dass der Führungsabschnitt abgewinkelt vom Steuerhebel ausgeführt ist, und/oder dass der Führungsabschnitt und der Steuerhebel materialeinheitlich, monolithisch und/oder einstückig ausgeführt sind, und/oder dass der Führungsabschnitt und der Steuerhebel aus einem Kunststoff, insbesondere Duroplast, ausgeführt sind. Auf diese Weise kann ein einfacher und kostengünstiger Steuerhebel bereitgestellt werden.

Zudem kann bei einer Vorrichtung vorgesehen sein, dass der Signalgeber mindestens einen Permanentmagneten mit einer magnetischen Orientierung, vorzugsweise drei Permanentmagneten mit alternierenden magnetischen Orientierungen, aufweisen kann. Ein Permanentmagnet kann ein elektromagnetisches Signal erzeugen, ohne dass eine Energiequelle zum Erzeugen des Signals notwendig ist. Ein elektromagnetisches Signal eignet sich auf eine vorteilhafterweise für eine präzise Positionsbestimmung des Steuerhebels. Durch ein Verwenden von drei Permanentmagneten kann ein elektromagnetisches Signal mit einer hohen Auflösung bereitgestellt werden, welcher sogar mithilfe von günstigen Sensoren präzise erkannt werden kann. Darüber hinaus ist es denkbar, dass das erste Sensorelement mindestens einen Magnetfeldsensor, bevorzugt Hallsensoren, aufweisen kann, um den Signalgeber im Detektionsbereich des ersten Sensorelementes zu erfassen. Magnetfeldsensoren, insbesondere Hallsensoren, haben den Vorteil, dass sie keine magnetischen Materialien erfordern, das zu messende Magnetfeld nicht verändern und sogar nicht bewegte Magnete zuverlässig erkennen. Im Rahmen der Erfindung kann das erste Sensorelement einen Magnetfeldsensor aufweisen, bspw. in Form eines Hallsensors mit einer 3D-Auslösung. Ein solches Sensorelement ist sehr präzise. Zudem kann das erste Sensorelement zwei Magnetfeldsensoren aufweisen, bspw. in Form von eindimensionalen Hallsensoren. Solche Sensoren sind kostengünstige Bauteile, die im Zusammenspiel eine präzise Detektion ermöglichen. Durch das Verwenden von zwei Magnetfeldsensoren kann außerdem der Vorteil erreicht werden, dass trotz eines Ausfalls eines der Magnetfeldsensoren eine Messung durch den anderen Sensor dennoch möglich ist.

Außerdem kann bei einer Vorrichtung vorgesehen sein, dass die Detektionseinheit mindestens ein zweites ortsfestes Sensorelement zum Detektieren mindestens einer weiteren Stellung des Steuerhebels aufweisen kann, wobei sich der Steuerhebel insbesondere in der Funktionsstellung im Detektionsbereich des zweiten Sensorelementes befinden kann, wobei das zweite Sensorelement vorzugsweise mindestens einen Magnetfeldsensor, bevorzugt einen Hallsensor, aufweisen kann. Somit kann eine aktive Erkennung nicht nur der Entriegelungsposition, sondern auch der Verriegelungsposition des Sperrbolzens ermöglicht werden. Die Überwachung und Detektion von beiden Endpositionen des Sperrbolzens hat den Vorteil, dass die Positionserfassung des Sperrbolzens präzisier und zuverlässiger erfolgen kann als bei der Überwachung nur einer Position, weil zum Auswerten mehr Daten vorliegen, die miteinander verglichen und somit verifiziert werden können.

Darüber hinaus kann bei einer Vorrichtung vorgesehen sein, dass das Getriebe ein Antriebsrad zum Antreiben des Steuerhebels und ein Schaltelement zum Antreiben des Sperrbolzens aufweist, wobei insbesondere das Antriebsrad form- und/oder kraftschlüssig mit dem Schaltelement verbunden ist. Auf diese Weise können die Herstellung und der Zusammenbau des Getriebes ermöglicht werden.

Ferner kann bei einer Vorrichtung vorgesehen sein, dass das Getriebe ein, vorzugsweise drehbar um eine Drehachse des Getriebes angetriebenes, Schaltelement mit einer, vorzugsweise wendelförmigen, Steuerkurve aufweist, welche mit einem korrespondierenden Steuermittel des Sperrbolzens zusammenwirkt, um eine Rotationsbewegung des Schaltelementes in eine translatorische Bewegung des Sperrbolzens entlang einer Hubrichtung zwischen der Verriegelungsposition und der Entriegelungsposition zu transformieren. Das Schaltelement kann dabei drehfest mit einem Antriebsrad des Getriebes verbunden sein und mit dem Antriebsrad rotieren. Die Steuerkurve des Schaltelementes kann sich wendelförmig bzw. schraubenförmig um die Drehachse des Antriebsrades erstrecken, die beim Drehen des Schaltelementes das Steuermittel des Sperrbolzens über die Höhe der Steuerkurve entlang einer Hubrichtung des Sperrbolzens nach oben und nach unten verlagert. Die Länge der Steuerkurve kann dabei größer als ein Hubweg sein, den der Sperrbolzen zwischen der Verriegelungsposition und der Entriegelungsposition ausführt.

Über die Steuerkurve kann folglich die Antriebswirkung stabil auf den Sperrbolzen übertragen werden.

Weiterhin kann im Rahmen der Erfindung vorgesehen sein, dass das Getriebe ein Antriebsrad mit einer, vorzugsweise spiralförmig um eine Drehachse des Getriebes ausgebildeten, Führungskulisse aufweist, welche mit einem korrespondierenden Führungspin des Steuerhebels zusammenwirkt, um eine Rotationsbewegung der Führungskulisse in eine translatorische Bewegung des Steuerhebels zwischen der Funktionsstellung und der Detektionsstellung, vorzugsweise entlang einer Richtung, die sich im Wesentlichen quer zu einer Hubrichtung des Sperrbolzens erstreckt, zu transformieren. Die Führungskulisse kann dabei an einem scheibenförmigen Element, welches drehfest mit einem Antriebsrad des Getriebes verbunden ist, oder direkt an einer Seite des Antriebsrades ausgebildet sein und sich im Wesentlichen spiralförmig um die Drehachse erstrecken. Die Länge der Führungskulisse kann dabei größer als ein Überführungsweg des Steuerhebels zwischen der Detektionsstellung und der Funktionsstellung sein. Über die Form und die Länge der Führungskulisse kann eine stabile Übertragung der Antriebswirkung auf den Steuerhebel erfolgen.

Das Getriebe selbst kann durch einen elektromechanischen Antrieb angetrieben werden, um somit den Sperrbolzen zu betätigen. Folglich kann es sich bei der Sperrvorrichtung um eine elektromechanische Sperrvorrichtung oder ein elektromechanisches Lenkradschloss bzw. elektromechanisches Gangschalthebelschloss handeln. Die Ansteuereinheit für diese elektromechanische Sperrvorrichtung kann baulich getrennt (an einem anderen Ort im Fahrzeug) von der erfindungsgemäßen Vorrichtung sein und ist folglich nicht im selben Gehäuse integriert.

Weiterhin kann die Erfindung vorsehen, dass das Getriebe einen Vorlauf für den Steuerhebel gegenüber dem Sperrbolzen beim Verlassen einer Stellung (bzw. einen Nachlauf für den Sperrbolzen gegenüber dem Steuerhebel beim Verlassen einer Position) und einen Nachlauf für den Steuerhebel gegenüber dem Sperrbolzen beim Erreichen einer Stellung (bzw. einen Vorlauf für den Sperrbolzen beim Erreichen einer Position) aufweist, wobei das Getriebe insbesondere eine Steuerkurve zum Antreiben des Sperrbolzens und eine Führungskulisse zum Antreiben des Steuerhebels aufweisen kann, wobei der Weg eines Steuermittels des Sperrbolzens über die Steuerkurve vorzugsweise kürzer als der Weg eines Führungspins des Steuerhebels über die Führungskulisse sein kann. Somit kann einerseits ermöglicht werden, dass der Führungspin des Steuerhebels einen längeren Weg durchläuft als das Steuermittel des Sperrbolzens. Andererseits kann somit ermöglicht werden, dass der Überführungsweg des Steuerhebels zwischen der Detektionsstellung und der Funktionsstellung größer ist als der Hubweg des Sperrbolzens zwischen der Entriegelungsposition und der Verriegelungsposition. Somit kann ein verbessertes Verhältnis zwischen einer stabilen Übertragung der Antriebswirkung auf den Sperrbolzen über einen relativ kurzen Hubweg und einer präzisen Positionserkennung durch einen längeren Überführungsweg des Steuerhebels bereitgestellt werden.

Des Weiteren wird die erfindungsgemäße Aufgabe durch ein Verfahren zum Antreiben einer Vorrichtung zum Sperren und Freigeben eines funktionswesentlichen Bauteils eines Kraftfahrzeuges, insbesondere einer Lenksäule oder eines Gangschalthebels, gelöst, die wie oben beschrieben ausgeführt sein kann. Hierzu sieht die Erfindung vor, dass der Sperrbolzen in der Funktionsstellung des Steuerhebels durch einen Sicherungsschenkel des Steuerhebels abgesichert wird, um eine unberechtigte Überführung des Sperrbolzens in die Entriegelungsposition zu verhindern. Mithilfe des erfindungsgemäßen Verfahrens können die gleichen Vorteile erreicht werden, die oben im Zusammenhang mit der erfindungsgemäßen Vorrichtung beschrieben wurden. Auf diese Vorteile wird vorliegend vollumfänglich Bezug genommen.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist die erfindungsgemäße Vorrichtung in mehreren Ausführungsbeispielen detailliert dargestellt. Es zeigen:
- Fig. 1: eine schematische Darstellung einer Vorrichtung im Sinne der Erfindung in einer Ansicht von oben,
- Fig. 2a: eine schematische Veranschaulichung eines Steuerhebels bei einer Bewegung zwischen einer Funktionsstellung und einer Detektionsstellung,
- Fig. 2b: eine schematische Veranschaulichung eines Sicherungsschenkels eines Steuerhebels bei einer Bewegung zwischen einer Funktionsstellung und einer Detektionsstellung,
- Fig. 2c: eine schematische Veranschaulichung eines Steuerhebels bei einer Bewegung zwischen einer Funktionsstellung und einer Detektionsstellung und eines Sperrbolzens bei einer Bewegung zwischen einer Verriegelungsposition und einer Entriegelungsposition,
- Fig. 3: eine schematische Seitenansicht einer Vorrichtung im Sinne der Erfindung mit einem Sperrbolzen in einer Entriegelungsposition, und
- Fig. 4: eine schematische Seitenansicht einer Vorrichtung im Sinne der Erfindung mit einem Sperrbolzen in einer Verriegelungsposition.

In den nachfolgenden Figuren werden für die gleichen technischen Merkmale auch von unterschiedlichen Ausführungsbeispielen die identischen Bezugszeichen verwendet.

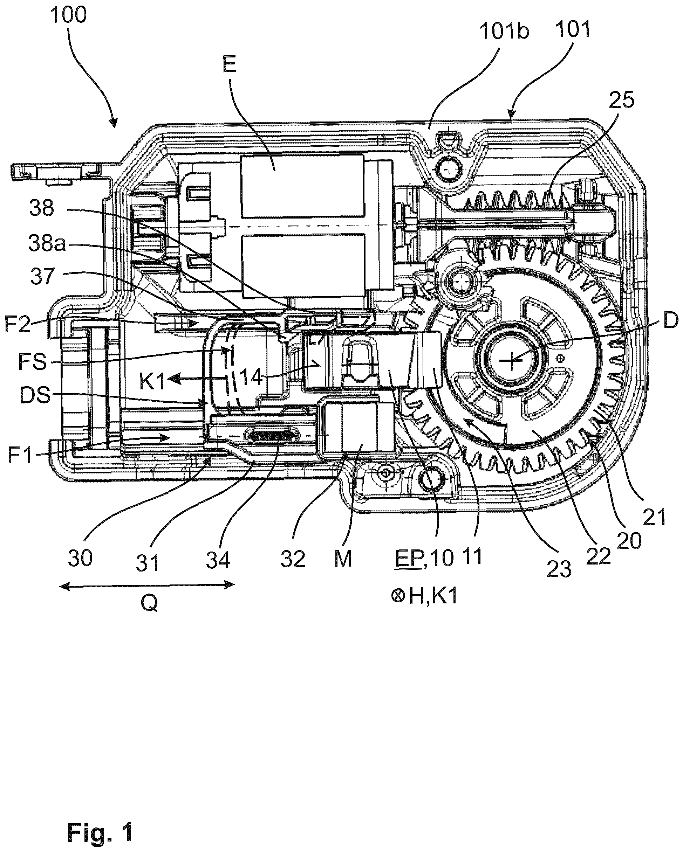

Die Figuren 1, 3 und 4 zeigen eine Vorrichtung 100 im Sinne der Erfindung, die zum Sperren und Freigeben eines funktionswesentlichen Bauteils eines Kraftfahrzeuges, insbesondere einer Lenksäule oder eines Gangschalthebels, ausgeführt ist und ebenfalls als eine Sperrvorrichtung bezeichnet werden kann. Die Vorrichtung 100 im Sinne der Erfindung kann bspw. als ein Lenkradschloss verwendet werden. Wie es die Figur 1 andeutet, kann die Vorrichtung 100 insbesondere als ein elektrisches Lenkradschloss ausgeführt sein.

Die Vorrichtung 100 weist ein Gehäuse 101 auf. Das Gehäuse 101 kann dabei einen Lagerabschnitt 101a für einen Sperrbolzen 10 und einen Steuerabschnitt 101b für eine Detektionseinheit 30, ein Getriebe 20, einen elektrischen Antrieb E, eine Steuerplatine S usw. aufweisen. An der Steuerplatine S kann zudem ein Stecker S1 befestigt sein, um die Steuerplatine S steuerungstechnisch an eine entsprechende Steuereinheit des Fahrzeuges anzuschließen. Ferner kann das Gehäuse 101 einen, bspw. abnehmbaren, Deckel 101c aufweisen, welcher am Steuerabschnitt 101b befestigt werden kann. Der Lagerabschnitt 101a und der Steuerabschnitt 101b können dabei einstückig und materialeinheitlich, bspw. aus einem Gusseisen, ausgeführt sein. Der Deckel 101c kann z. B. aus Plastik oder Leichtmetall ausgeführt sein.

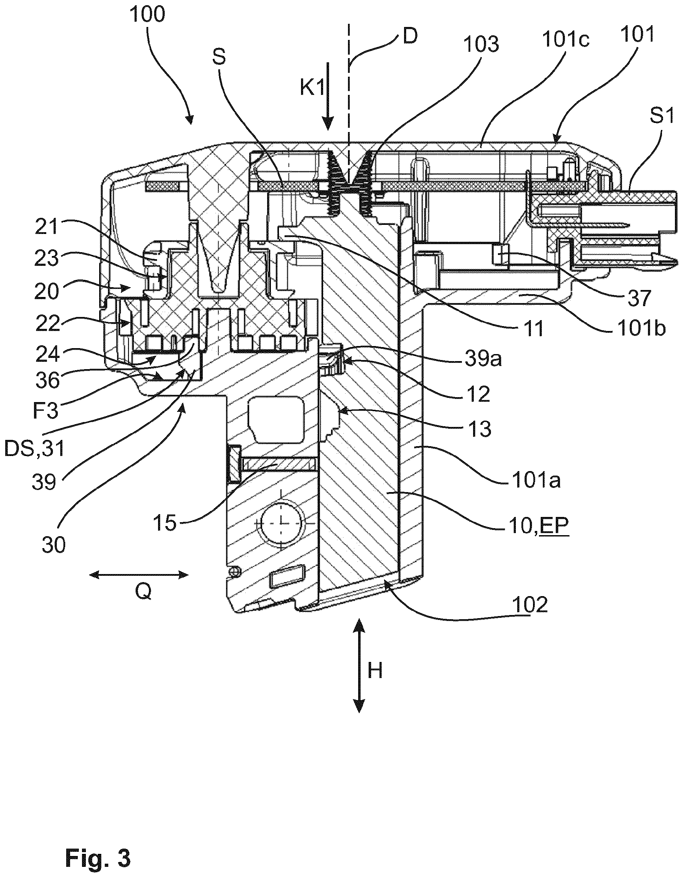

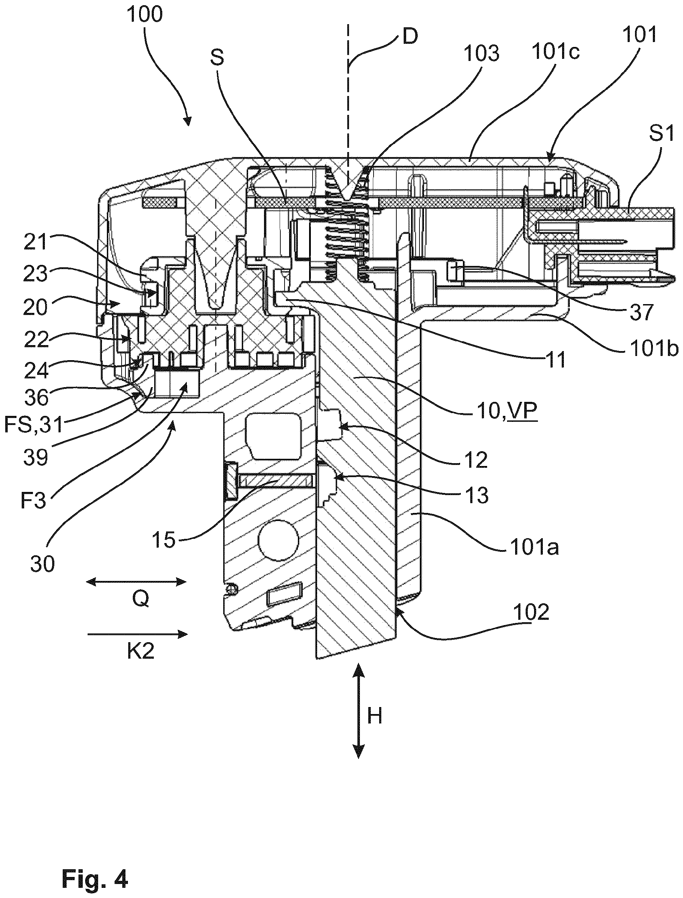

In dem Gehäuse 101, insbesondere in dem Lagerabschnitt 101a ist der Sperrbolzen 10 zwischen zwei Positionen VP, EP bewegbar gelagert:
- einer Verriegelungsposition VP (vgl. die Figuren 1 und 4), in welcher der Sperrbolzen 10 mit dem funktionswesentlichen Bauteil in Eingriff bringbar ist, und
- einer Entriegelungsposition EP (vgl. die Figur 3), in welcher der Sperrbolzen 10 das funktionswesentliche Bauteil freigibt.

Das funktionswesentliche Bauteil ist in den Figuren lediglich aus Einfachheitsgründen nicht gezeigt. Das funktionswesentliche Bauteil kann bspw. einen Zahnradkranz aufweisen. Der Sperrbolzen 10 kann in der Verriegelungsposition VP (siehe Figur 4) aus einer Öffnung 102 aus dem Gehäuse 101 herausragen und in eine Aufnahme zwischen zwei benachbarten Zähnen am Zahnradkranz eingreifen, um das funktionswesentliche Bauteil zu sperren. In der Entriegelungsposition EP (siehe Figur 3) kann der Sperrbolzen 10 in das Gehäuse 101 eintauchen und das funktionswesentliche Bauteil freigeben.

Zum überführen des Sperrbolzens 10 zwischen der Verriegelungsposition VP und der Entriegelungsposition EP ist ein Getriebe 20 vorgesehen. Das Getriebe 20 kann dabei durch einen elektrischen Antrieb E angetrieben werden. Hierzu kann der elektrische Antrieb E die Antriebswirkung über eine Schnecke 25 an ein Antriebsrad 21 des Getriebes 20 übergeben. Auf die detaillierte Ausgestaltung des Getriebes 20 wird im Nachfolgenden noch Bezug genommen.

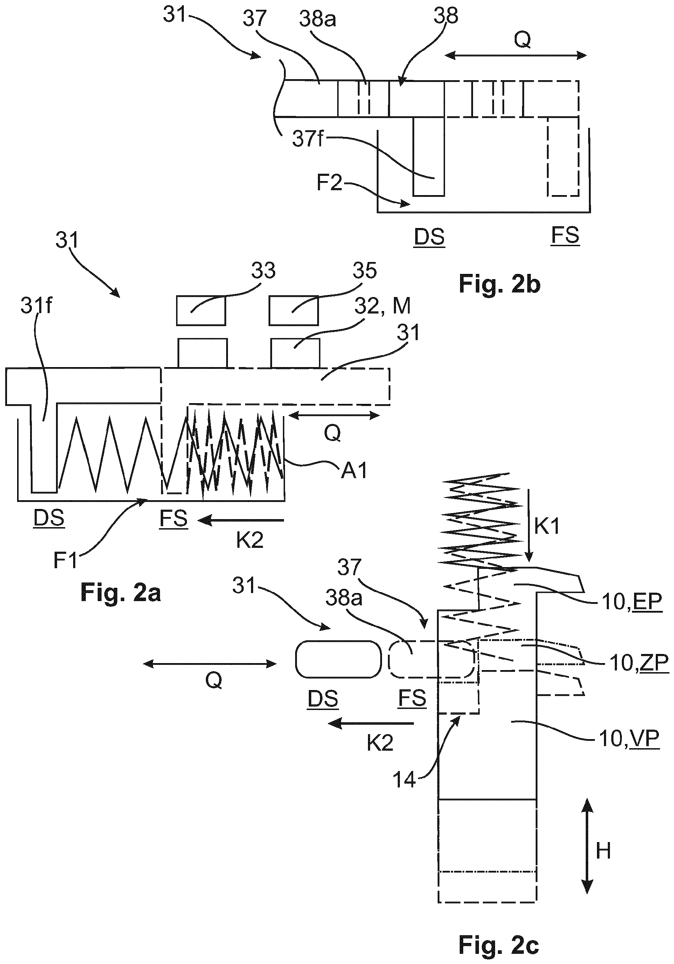

Ferner weist die Vorrichtung 100 eine Detektionseinheit 30 auf, die einen Steuerhebel 31 zum Bewegen eines Signalgebers 32 (siehe Figuren 1 und 2) und mindestens ein erstes ortsfestes Sensorelement 33 (siehe Figur 2) zum Detektieren mindestens einer Stellung FS, DS des Steuerhebels 31 aufweist. Zumindest ein erstes Sensorelement 33 kann dabei zum Detektieren der Detektionsstellung DS des Steuerhebels 31 und somit der Entriegelungsposition EP des Sperrbolzens 10 und ggf. ein zweites Sensorelement 35 zum Detektieren der Funktionsstellung FS des Steuerhebels 31 und somit der Verriegelungsposition EP des Sperrbolzens 10 vorgesehen sein.

Wie es die Figur 1 mithilfe einer durchgezogenen Linie und einer unterbrochenen Linie zeigt, ist der Steuerhebel 31 in dem Gehäuse 101, insbesondere in dem Steuerabschnitt 101b des Gehäuses 101, bewegbar zwischen zwei Stellungen FS, DS gelagert:
- einer Funktionsstellung FS (s. unterbrochen Linie in der Figur 1), in welcher sich der Signalgeber 32 beabstandet vom ersten Sensorelement 33 befindet (vgl. außerdem die Figur 2a), und
- einer Detektionsstellung DS (s. durchgezogene Linie in der Figur 1), in welcher sich der Signalgeber 32 im Detektionsbereich des ersten Sensorelementes 33 befindet, in dem Gehäuse 101 gelagert ist (vgl. außerdem die Figur 2a).

Das Getriebe 20 steht dabei auch mit dem Steuerhebel 31 in einer mechanischen Wirkverbindung, um den Steuerhebel 31 zwischen der Funktionsstellung FS und der Detektionsstellung DS zu überführen.

Wie es die Figur 1 verdeutlicht, weist der Steuerhebel 31 einen Sicherungsschenkel 37 auf. Wie es die Figur 1 in Verbindung mit der Figur 2c zeigt, ist der Sicherungsschenkel 37 dazu ausgeführt, in der Funktionsstellung FS des Steuerhebels 31 eine unberechtigte Überführung des Sperrbolzens 10 in die Entriegelungsposition EP, sei es aus einer Verriegelungsposition VP (siehe unterbrochen Linie in der Figur 2c) oder aus einer Zwischenposition ZP (siehe strichpunktierte Linie in der Figur 2c), insbesondere durch einen Form- und/oder Kraftschluss mit dem Sperrbolzen 10, zu verhindern.

Auf diese Weise kann mithilfe des Steuerhebels 31 mindestens zwei Funktionalitäten zur Verfügung gestellt werden, wie dies die Figuren 2a bis 2c im Detail verdeutlichen.

Eine Funktionalität des Steuerhebels 31 ist die Detektion (siehe Figur 2a). Hierzu trägt der Steuerhebel den Signalgeber 32, bspw. einen Magneten M, welcher mit dem Steuerhebel 31 hin und her verschiebbar ist. Die Erkennung mithilfe zugehöriger Sensorelemente 33, 35 erlaubt es, die Stellung FS, DS des Steuerhebels 31 und damit indirekt auch die Position VP, EP des Sperrbolzens 10 zu bestimmen.

Eine weitere Funktionalität des Steuerhebels 31 ist die mechanische Absicherung des Sperrbolzens 10 (siehe die Figuren 2a und 2c), insbesondere gegen ein unbefugtes Überführen in die Entriegelungsposition EP, bspw. durch Magnete oder durch Schläge am Gehäuse.

In Situationen, in denen der Sperrbolzen 10 die Verriegelungsposition VP nicht einnehmen kann, bspw. aufgrund einer Fehlstellung des funktionswesentlichen Bauteils, in der der Sperrbolzen 10 in eine korrespondierende Aufnahme am funktionswesentlichen Bauteil nicht eingreifen kann, verbleibt der Sperrbolzen 10 in einer Zwischenposition ZP (siehe strichpunktierte Linie in der Figur 2c). Wie es die Figur 2c verdeutlicht, kann die Zwischenposition ZP kurz vor dem Erreichen der Verriegelungsposition VP liegen. In solchen Situationen sichert der Sicherungsschenkel 37 des Steuerhebels 31 in der Funktionsstellung FS des Steuerhebels 31 den Sperrbolzen 10 von oben, d. h. in die Entriegelungsposition EP, ab (vgl. die Ansicht in der Figur 2c), um eine unberechtigte Überführung des Sperrbolzens 10 in die Entriegelungsposition EP zu verhindern. Der Sicherungsschenkel 37 des Steuerhebels 31 kann in der Funktionsstellung FS des Steuerhebels 31 am Sperrbolzen 10 in der Zwischenposition ZP anliegen (vgl. die Figur 2c), um insbesondere einen Formschluss mit einer Entsprechenden Auflagefläche 14 am Sperrbolzen 10 zu bilden. Zudem kann der Sicherungsschenkel 37 des Steuerhebels 31 in der Funktionsstellung FS des Steuerhebels 31 den Sperrbolzen 10 nach unten in die Verriegelungsposition VP federelastisch beaufschlagen, um vorzugsweise einen Form- und Kraftschluss mit dem Sperrbolzen 10 zu bilden. Vorteilhafterweise kann der Steuerhebel 31 von der Funktionsstellung FS in die Detektionsstellung DS mit einer zweiten Federkraft K2 beaufschlagt sein, wie es die Figuren 1 und 2a zeigen. Somit kann in der Funktionsstellung FS des Steuerhebels 31 der Sicherungsschenkel 37 des Steuerhebels 31 die zweite Federkraft K2 auf den Sperrbolzen 10 übertragen, um diesen nach unten zu drücken. Dazu kommt noch eine erste Federkraft K1, die den Sperrbolzen 10 nach unten in die Verriegelungsposition VP belastet, wobei eine entsprechende Feder (bzw. ein erstes Federelement 103) zwischen dem Deckel 101c und dem Sperrbolzen 10 angeordnet werden kann, wie dies die Figuren 3 und 4 zeigen. Auf diese Weise kann der Sicherungsschenkel 37 des Steuerhebels 31 in der Funktionsstellung FS des Steuerhebels 31 den Sperrbolzen 10 in der Zwischenposition ZP nach unten in die Verriegelungsstellung VP federelastisch beaufschlagen.

Aber auch, wenn der Sperrbolzen 10 die Verriegelungsposition VP erreicht hat, befindet sich der Sicherungsschenkel 37 des Steuerhebels 31 über dem Sperrbolzen 10 und sichert den Sperrbolzen 10 gegen ein unbefugtes Überführen in die Entriegelungsposition ab, indem es den Weg nach oben in die Entriegelungsposition EP absperrt (vgl. die Ansicht in der Figur 2c). Auf diese Weise kann sichergestellt werden, dass keine mechanischen Einwirkungen von außen am Gehäuse 101, die unberechtigterweise erfolgen, den Sperrbozen 10 nach oben bewegen können.

Weiterhin deutet die Figur 3 an, dass im Rahmen der Funktionalität des Steuerhebels 31 zur mechanischen Absicherung des Sperrbolzens 10 der Steuerhebel 31 in der Detektionsstellung DS den Sperrbolzen 10 in seiner Entriegelungsposition EP halten kann, bspw. durch ein mechanisches Einrasten eines Sicherungselementes 39a in einer korrespondierenden Halteausnehmung 12 am Sperrbolzen 10. Das Sicherungselement 39a kann dabei an einem Führungsabschnitt 39 des Steuerhebels 31 ausgebildet sein.

Vorteilhafterweise kann der Steuerhebel 31 mit dem Sicherungsschenkel 37 und dem Führungsabschnitt 39 materialeinheitlich, monolithisch und/oder einstückig, vorzugsweise aus einem Kunststoff, insbesondere Duroplast, ausgeführt sein.

Wie es die Figuren 1, und 2b zeigen, kann der Sicherungsschenkel 37 einen Arretierabschnitt 38 aufweisen, wobei der Arretierabschnitt 38 in der Detektionsstellung DS des Steuerhebels 31 sich beabstandet vom Sperrbolzen 10 befindet (vgl. die durchgezogenen Linien in der Figur 2c) und wobei der Arretierabschnitt 38 in der Funktionsstellung FS des Steuerhebels 31 den Sperrbolzen 10 in der Verriegelungsposition VP gegen ein Überführen in die Entriegelungsposition EP absichert (vgl. die unterbrochenen Linien in der Figur 2c) und/oder den Sperrbolzen 10 in einer Zwischenposition ZP, die zwischen der Verriegelungsposition VP und der Entriegelungsposition EP, insbesondere kurz vor dem Erreichen der Verriegelungsposition VP, liegt, form- und/oder kraftschlüssig arretiert (vgl. die strichpunktierte Linie in der Figur 2c).

Weiterhin ist es aus der Figur 1 erkennbar, dass der Arretierabschnitt 38 eine, insbesondere in Richtung zum Steuerhebel 31, abstehende Nase 38a aufweist. Wie es weiterhin die Figur 2c zeigt, kann der Arretierabschnitt 38 in der Funktionsstellung FS des Steuerhebels 31 von oben an einer Auflagefläche 14 am Sperrbolzen 10, vorzugsweise flächig, zur Auflage gebracht werden, um den Sperrbolzen 10 in der Zwischenposition ZP in die Verriegelungsposition VP form- und/oder kraftschlüssig zu arretieren und/oder um ein gewaltsames Überführen des Sperrbolzens 10 aus der Verriegelungsposition VP und/oder aus der Zwischenposition ZP in die Entriegelungsposition EP zu verhindern. Auch zeigt die Figur 2c, dass der Sperrbolzen 10 eine, insbesondere abgesenkte, Auflagefläche 14 für den Arretierabschnitt 38 aufweisen kann. Dabei können der Arretierabschnitt 38 des Sicherungsschenkels 37 und der korrespondierenden Auflagefläche 14 am Sperrbolzen 10 einen Form- und/oder Kraftschluss zum Absichern des Sperrbolzens 10 gegen unberechtigte Manipulationen von außen bilden, insbesondere wenn der Sperrbolzen 10 in der Zwischenposition ZP verblieben ist (vgl. die strichpunktierte Linie in der Figur 2c). Wenn der Sperrbolzen die Verriegelungsposition VP erreicht hat (vgl. die unterbrochene Linie in der Figur 2c), liegt der Arretierabschnitt 38 des Sicherungsschenkels 37 über der Auflagefläche 14 am Sperrbolzen 10 und versperrt dem Sperrbolzen 10 den Weg nach oben (in der Sicht der Figur 2c) in die Entriegelungsposition EP.

Des Weiteren ist es aus der Figur 1 zu erkennen, dass der Sicherungsschenkel 37 als eine Verlängerung des Steuerhebels 31 ausgeführt sein kann. Wie oben bereits erwähnt, können der Sicherungsschenkel 37 und der Steuerhebel 31 materialeinheitlich, monolithisch und/oder einstückig, aus einem Kunststoff, insbesondere Duroplast, ausgeführt sein. Dabei können der Sicherungsschenkel 37 und der Steuerhebel 31 ein U-förmiges Bauteil bilden. Zudem zeigt die Figur 1, dass sich der Sicherungsschenkel 37 im Wesentlichen parallel zum Steuerhebel 31 erstrecken kann. Ferner zeigt die Figur 1, dass der Arretierabschnitt 38 vom Sicherungsschenkel 37 in Richtung zum Steuerhebel 31 abstehen kann. Wie es in der Figur 1 mit der unterbrochenen Linie angedeutet ist, können der Sicherungsschenkel 37 und der Steuerhebel 31 zumindest in der Verriegelungsposition EP des Sperrbolzens 10 den Sperrbolzen 10 beidseitig umschließen.

Auf diese Weise kann sichergestellt werden, dass der Steuerhebel 31 den Sperrbolzen 10 sowohl in der Verriegelungsposition VP absichern (siehe Figur 1 und Figur 2c), als auch in der Entriegelungsposition EP halten kann (siehe Figur 3). Wie es die Figuren 1 bis 4 andeuten, kann der Steuerhebel 31 senkrecht zu einer Erstreckungsrichtung bzw. Hubrichtung H des Sperrbolzens 10 bewegt werden. In der Verriegelungsposition VP des Sperrbolzens 10 kann der Sicherungsschenkel 37 des Steuerhebels 31 von einer Seite (von links in der Ansicht der Figur 1 oder von rechts in der Ansicht der Figur 3) bewegt werden. In der Entriegelungsposition EP des Sperrbolzens 10 kann ein Führungsabschnitt 39 des Steuerhebels 31 von der anderen Seite (von rechts in der Ansicht der Figur 1 oder von links in der Ansicht der Figur 3) des Sperrbolzens 10 zum Sperrbolzen 10 bewegt werden.

Wie oben bereits erwähnt und die Figuren 3 und 4 zeigen, kann ein erstes Federelement 103 zwischen dem Deckel 101c des Gehäuses 101 und dem Sperrbolzen 10 vorgesehen sein, um den Sperrbolzen 10 mit einer ersten Federkraft K1 (siehe die Figur 3) aus der Entriegelungsposition EP in die Verriegelungsposition VP zu beaufschlagen. In der Ansicht der Figur 4 kann die Feder bzw. das erste Federelement 103 bspw. entspannt sein. Mithilfe der ersten Federkraft K1 kann der Sperrbolzen 10 bei der Überführung von der Entriegelungsposition EP in die Verriegelungsposition VP durch das Getriebe 20 unterstützt werden. Auch kann mithilfe der ersten Federkraft K1 der Sperrbolzen 10 in der Zwischenposition ZP federelastisch beaufschlagt werden, um in die Verriegelungsposition VP zu fallen, wenn bspw. das funktionswesentliche Bauteil aus der Fehlstellung leicht verrückt wird.

Darüber hinaus zeigt die Figur 2a ein zweites Federelement 34, welches dazu dient, den Steuerhebel 31 mit einer zweiten Federkraft K2 aus der Funktionsstellung FS in die Detektionsstellung DS zu beaufschlagen.

Wie es die Figur 2a weiterhin zeigt, kann das Federelement 34 in einer ersten Führung F1 im Gehäuse 101 der Vorrichtung 100 angeordnet sein. Dabei kann das Federelement 34 zwischen einem Federhalter 31f am Steuerhebel 31 und einem Anschlag A1 in der ersten Führung F1 im Gehäuse 101 der Vorrichtung 100 angeordnet sein. Mithilfe der zweiten Federkraft K2 kann die Überführung des Steuerhebels 31 aus der Funktionsstellung FS in die Detektionsstellung DS durch das Getriebe 20 unterstützt werden. Auch kann das Federelement 34 dazu dienen, die zweite Federkraft K2 über den Sicherungsschenkel 37 in der Funktionsstellung FS des Steuerhebels 31 an den Sperrbolzen 10 in der Zwischenposition ZP zu übertragen. Im letzteren Fall kann ein Form- und Kraftschluss zur Absicherung des Sperrbolzens 10 in der Zwischenposition ZP hergestellt werden.

Der Federhalter 31f am Steuerhebel 31 kann außerdem zum Stabilisieren der Bewegung des Steuerhebels 31 zwischen den Stellungen FS, DS dienen.

Zudem zeigt die Figur 2b, dass der Sicherungsschenkel 37, insbesondere ein Schenkelfuß 37f des Sicherungsschenkels 37, entlang einer zweiten Führung F2 im Gehäuse 101 der Vorrichtung 100 bewegbar gelagert sein kann. Somit kann die Bewegung des Steuerhebels 31 und des Sicherungsschenkel 37, ggf. zusätzlich zur Führung F1, stabilisiert werden.

Wie oben bereits erklärt und wie es weiterhin die Figuren 3 und 4 zeigen, kann der Steuerhebel 31 einen Führungsabschnitt 39 aufweisen, der dazu ausgeführt ist, den Steuerhebel 31 bei der Bewegung zwischen der Funktionsstellung FS und der Detektionsstellung DS stabil zu führen und/oder den Sperrbolzen 10 in der Entriegelungsposition EP form- und/oder kraftschlüssig abzusichern (vgl. die Figur 3).

Wie es zudem die Figuren 3 und 4 andeuten, kann der Führungsabschnitt 39 ein Sicherungselement 39a aufweisen, der in der Funktionsstellung FS des Steuerhebels 31 sich beabstandet vom Sperrbolzen 10 befindet und in der Detektionsstellung DS des Steuerhebels 31 in eine korrespondierende Halteausnehmung 12 am Sperrbolzen 10 form- und/oder kraftschlüssig eingreifen kann. Auf diese Weise kann der Sperrbolzen 10 in der Entriegelungsposition EP abgesichert werden, um bspw. ein ungewolltes Zurückfallen des Sperrbolzens 10 in die Verriegelungsposition VP bei einem laufenden Betrieb des Fahrzeuges zu verhindern. Die Entriegelungsposition EP des Sperrbolzens 10 entspricht der Detektionsstellung DS des Steuerhebels 31. Der Steuerhebel 31 kann somit in der Detektionsstellung DS des Steuerhebels 31 zum Detektieren und zum Halten der Entriegelungsposition EP des Sperrbolzens 10 dienen.

Am Führungsabschnitt 39 kann ein Führungspin 36 ausgebildet sein, der in eine, vorzugsweise spiralförmig um eine Drehachse D des Getriebes 20 ausgebildete, Führungskulisse 24 an einem Antriebsrad 21 des Getriebes 20 eingreifen kann, um den Steuerhebel 31 zwischen der Funktionsstellung FS und der Detektionsstellung DS, zu überführen. Die Führungskulisse 24 dient dabei als eine Zwangsführung zum Überführen des Steuerhebels 31 zwischen den Stellungen FS, DS.

Wie es die Figuren 3 und 4 dabei andeuten, kann der Führungsabschnitt 39 in einer dritten Führung F3 im Gehäuse 101 der Vorrichtung 100 bewegbar gelagert sein. Auf diese Weise kann die Bewegung des Führungsabschnittes 39 und somit des ganzen Steuerhebels 31, ggf. zusätzlich zu den Führungen F1 und/oder F2, stabilisiert werden. Der Führungsabschnitt 39 kann dabei relativ stabil, bspw. plateauförmig und/oder massiv, ausgeführt sein.

Aus den Figuren 3 und 4 kann erkannt werden, dass der Führungsabschnitt 39 abgewinkelt vom Steuerhebel 31 ausgeführt sein kann, weil die Figuren 3 und 4 den Führungsabschnitt 39 tiefer zeigen als den Sicherungsschenkel 37.

Die Figuren 3 und 4 zeigen zudem einen Arretierstift 15, der als ein Teil einer Einbruchssicherung bei einer Vorrichtung 100 im Sinne der Erfindung vorgesehen sein kann. Der Arretierstift 15 kann dabei durch ein nicht gezeigtes Zurückhaltungselement, bspw. ein Stift oder Blech, zurückgehalten werden, welches am Deckel 101c des Gehäuses 101 befestigt werden kann. Wenn der Deckel 101c des Gehäuses 101 unberechtigt abgenommen wird, zieht der Deckel 101c auch das Zurückhaltungselement mit sich. Somit wird der Arretierstift 15 freigegeben, der in eine korrespondierende, vorzugsweise treppenförmige, Arretierausnehmung 13 im Sperrbolzen 10 einfahren kann.

Wie es aus den Figuren 1, 3 und 4 zudem ersichtlich ist, kann das Getriebe 20 ein Antriebsrad 21 zum Antreiben des Steuerhebels 31 und ein Schaltelement 22 zum Antreiben des Sperrbolzens 10 aufweisen. Dabei ist es denkbar, dass das Antriebsrad 21 form- und/oder kraftschlüssig mit dem Schaltelement 22 verbunden sein kann.

Die Figuren 1, 3 und 4 deuten an, dass das Schaltelement 22 drehbar um eine Drehachse D des Getriebes 20 angetrieben werden kann. Das Schaltelement 22 kann dabei mit einer, vorzugsweise wendelförmigen, Steuerkurve 23 ausgeführt sein, welche mit einem korrespondierenden Steuermittel 11 des Sperrbolzens 10 zusammenwirkt, um eine Rotationsbewegung des Schaltelementes 22 in eine translatorische Bewegung des Sperrbolzens 10 entlang einer Hubrichtung H zwischen der Verriegelungsposition VP und der Entriegelungsposition EP zu transformieren. Das Schaltelement 22 kann dabei drehfest mit dem Antriebsrad 21 des Getriebes 20 verbunden sein und mit dem Antriebsrad 21, angetrieben durch eine Schnecke 25 eines elektrischen Antriebes E (vgl. die Figur 1), rotieren. Die Steuerkurve 23 des Schaltelementes 22 kann sich wendelförmig bzw. schraubenförmig um die Drehachse D des Antriebsrades 21 erstrecken, die beim Drehen des Schaltelementes 22 das Steuermittel 11 des Sperrbolzens 10 über die Höhe der Steuerkurve 23 entlang der Hubrichtung H des Sperrbolzens 10 nach oben und nach unten verlagert (vgl. die Positionen des Steuermittels 11 in den Figuren 3 und 4). Die Länge der Steuerkurve 23 kann dabei größer als der Hubweg des Sperrbolzens 10 zwischen der Verriegelungsposition VP und der Entriegelungsposition EP sein.

Weiterhin deuten die Figuren 1, 3 und 4 an, dass das Getriebe 20 das Antriebsrad 21 mit einer, vorzugsweise spiralförmig um die Drehachse D des Getriebes 20 ausgebildeten, Führungskulisse 24 aufweisen kann, welche mit dem korrespondierenden Führungspin 36 des Steuerhebels 31 zusammenwirkt, um eine Rotationsbewegung der Führungskulisse 24 in eine translatorische Bewegung des Steuerhebels 31 zwischen der Funktionsstellung FS und der Detektionsstellung DS, vorzugsweise entlang einer Richtung Q, die sich im Wesentlichen quer zu einer Hubrichtung H des Sperrbolzens 10 erstreckt, zu transformieren. Die Führungskulisse 24 kann dabei an einem scheibenförmigen Element, welches drehfest mit dem Antriebsrad 21 des Getriebes 20 verbunden sein kann, oder direkt an einer Seite des Antriebsrades 21 ausgebildet sein und sich im Wesentlichen spiralförmig um die Drehachse D erstrecken. Die Länge der Führungskulisse 24 kann dabei größer als ein Überführungsweg des Steuerhebels 31 zwischen der Detektionsstellung DS und der Funktionsstellung FS sein.

Vorteilhafterweise kann das Getriebe 20 einen Vorlauf für den Steuerhebel 31 gegenüber dem Sperrbolzen 10 beim Verlassen einer Stellung FS, DS bzw. einen Nachlauf für den Sperrbolzen 10 gegenüber dem Steuerhebel 31 beim Verlassen einer Position VP, EP und einen Nachlauf für den Steuerhebel 31 gegenüber dem Sperrbolzen 10 beim Erreichen einer Stellung FS, DS bzw. einen Vorlauf für den Sperrbolzen 10 beim Erreichen einer Position VP, EP breitstellen. Hierzu kann der Weg des Steuermittels 11 des Sperrbolzens 10 über die Steuerkurve 23 kürzer ausgeführt sein als der Weg der Führungspins 36 des Steuerhebels 31 über die Führungskulisse 24. Somit kann einerseits ermöglicht werden, dass der Führungspin 36 des Steuerhebels 31 einen längeren Weg durchläuft als das Steuermittel 11 des Sperrbolzens 10. Andererseits kann somit ermöglicht werden, dass der Überführungsweg des Steuerhebels 31 zwischen der Detektionsstellung DS und der Funktionsstellung FS größer ist als der Hubweg des Sperrbolzens 10 zwischen der Entriegelungsposition EP und der Verriegelungsposition VP. Somit kann ein verbessertes Verhältnis zwischen einer stabilen Übertragung der Antriebswirkung auf den Sperrbolzen 10 über einen relativ kurzen Hubweg und einer präzisen Positionserkennung durch einen längeren Überführungsweg des Steuerhebels 31 bereitgestellt werden.

Ein entsprechendes Verfahren zum Antreiben einer solchen Vorrichtung 100, die wie oben beschrieben ausgeführt sein kann, stellt ebenfalls einen Aspekt der Erfindung dar. Hierzu sieht die Erfindung vor, dass der Sperrbolzen 10 in der Funktionsstellung FS des Steuerhebels 31 durch einen Sicherungsschenkel 37 des Steuerhebels 31 abgesichert wird, um eine unberechtigte Überführung des Sperrbolzens 10 in die Entriegelungsposition EP zu verhindern.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung/Ansprüche zu verlassen.

### Bezugszeichenliste

- 100: Vorrichtung
- 101: Gehäuse
- 101a: Lagerabschnitt
- 101b: Steuerabschnitt
- 101c: Deckel
- 102: Öffnung
- 103: erstes Federelement

- 10: Sperrbolzen
- 11: Steuermittel
- 12: Halteausnehmung
- 13: Arretierausnehmung
- 14: Auflagefläche
- 15: Arretierstift

- 20: Getriebe
- 21: Antriebsrad
- 22: Schaltelement
- 23: Steuerkurve
- 24: Führungskulisse
- 25: Schnecke

- 30: Detektionseinheit
- 31: Steuerhebel
- 31f: Federhalter
- 32: Signalgeber
- 33: erstes Sensorelement
- 34: zweites Federelement
- 35: zweites Sensorelement
- 36: Führungspin
- 37: Sicherungsschenkel
- 37f: Schenkelfuß
- 38: Arretierabschnitt
- 38a: Nase
- 39: Führungsabschnitt
- 39a: Sicherungselement

- D: Drehachse
- E: elektrischer Antrieb, Motor
- H: Hubrichtung
- M: Permanentmagnet
- S: Steuerplatine
- Q: Richtung

- VP: Verriegelungsposition
- ZP: Zwischenposition
- EP: Entriegelungsposition

- FS: Funktionsstellung
- DS: Detektionsstellung

- A1: Anschlag
- F1: erste Führung
- F2: zweite Führung
- F3: dritte Führung
- K1: erste Federkraft
- K2: zweite Federkraft
- S1: Stecker

## Patentansprüche

1. Vorrichtung (100) zum Sperren und Freigeben eines funktionswesentlichen Bauteils eines Kraftfahrzeuges, insbesondere einer Lenksäule oder eines Gangschalthebels, aufweisend:
- ein Gehäuse (101), in welchem:
- ein Sperrbolzen (10) zwischen einer Verriegelungsposition (VP), in welcher der Sperrbolzen (10) mit dem funktionswesentlichen Bauteil in Eingriff bringbar ist, und einer Entriegelungsposition (EP), in welcher der Sperrbolzen (10) das funktionswesentliche Bauteil freigibt, bewegbar gelagert ist,
- ein Getriebe (20),
welches mit dem Sperrbolzen (10) in einer mechanischen Wirkverbindung steht, um den Sperrbolzen (10) zwischen der Verriegelungsposition (VP) und der Entriegelungsposition (EP) zu überführen,
- und eine Detektionseinheit (30),
welche einen Steuerhebel (31) zum Bewegen eines Signalgebers (32) und mindestens ein erstes ortsfestes Sensorelement (33) zum Detektieren mindestens einer Stellung (FS, DS) des Steuerhebels (31) aufweist,
wobei der Steuerhebel (31) in dem Gehäuse (101) zwischen einer Funktionsstellung (FS), in welcher sich der Signalgeber (32) beabstandet vom ersten Sensorelement (33) befindet, und einer Detektionsstellung (DS), in welcher sich der Signalgeber (32) im Detektionsbereich des ersten Sensorelementes (33) befindet, bewegbar gelagert ist, und wobei das Getriebe (20) mit dem Steuerhebel (31) in einer mechanischen Wirkverbindung steht, um den Steuerhebel (31) zwischen der Funktionsstellung (FS) und der Detektionsstellung (DS) zu überführen,
**dadurch gekennzeichnet,**
**dass** der Steuerhebel (31) einen Sicherungsschenkel (37) aufweist, der dazu ausgeführt ist, in der Funktionsstellung (FS) des Steuerhebels (31) eine unberechtigte Überführung des Sperrbolzens (10) in die Entriegelungsposition (EP), insbesondere durch einen Form- und/oder Kraftschluss mit dem Sperrbolzen (10), zu verhindern, und dass der Sicherungsschenkel (37) einen Arretierabschnitt (38) aufweist,
wobei der Arretierabschnitt (38) in der Detektionsstellung (DS) des Steuerhebels (31) sich beabstandet vom Sperrbolzen (10) befindet und
wobei der Arretierabschnitt (38) in der Funktionsstellung (FS) des Steuerhebels (31) den Sperrbolzen (10) in der Verriegelungsposition (VP) gegen ein Überführen in die Entriegelungsposition (EP) absichert und
den Sperrbolzen (10) in einer Zwischenposition (ZP), die zwischen der Verriegelungsposition (VP) und der Entriegelungsposition (EP)kurz vor dem Erreichen der Verriegelungsposition (VP) liegt, form- und/oder kraftschlüssig arretiert.

2. Vorrichtung (100) nach Anspruch 1,
**dadurch gekennzeichnet,**
**dass** der Arretierabschnitt (38) eine, insbesondere in Richtung zum Steuerhebel (31), abstehende Nase (38a) aufweist,
und/oder dass der Arretierabschnitt (38) in der Funktionsstellung (FS) des Steuerhebels (31) von oben an einer Auflagefläche (14) am Sperrbolzen (10), vorzugsweise flächig, zur Auflage bringbar ist,
um den Sperrbolzen (10) in der Zwischenposition (ZP) in die Verriegelungsposition (VP) form- und/oder kraftschlüssig zu arretieren und/oder
um ein gewaltsames Überführen des Sperrbolzens (10) aus der Verriegelungsposition (VP) und/oder aus der Zwischenposition (ZP) in die Entriegelungsposition (EP) zu verhindern,
und/oder dass der Sperrbolzen (10) eine, insbesondere abgesenkte, Auflagefläche (14) für den Arretierabschnitt (38) aufweist.

3. Vorrichtung (100) nach einem der vorhergehenden Ansprüche,
**dadurch gekennzeichnet,**
**dass** der Sicherungsschenkel (37) als eine Verlängerung des Steuerhebels (31) ausgeführt ist,
und/oder dass der Sicherungsschenkel (37) und der Steuerhebel (31) materialeinheitlich, monolithisch und/oder einstückig ausgeführt sind,
und/oder dass der Sicherungsschenkel (37) und der Steuerhebel (31) aus einem Kunststoff, insbesondere Duroplast, ausgeführt sind,
und/oder dass der Sicherungsschenkel (37) und der Steuerhebel (31) ein U-förmiges Bauteil bilden,
und/oder dass sich der Sicherungsschenkel (37) im Wesentlichen parallel zum Steuerhebel (31) erstreckt,
wobei insbesondere der Arretierabschnitt (38) vom Sicherungsschenkel (37) in Richtung zum Steuerhebel (31) absteht,
und/oder dass der Sicherungsschenkel (37) und der Steuerhebel (31) zumindest in der Verriegelungsposition (VP) des Sperrbolzens (10) den Sperrbolzen (10) beidseitig umschließen.

4. Vorrichtung (100) nach einem der vorhergehenden Ansprüche,
**dadurch gekennzeichnet,**
**dass** ein erstes Federelement (103) vorgesehen ist, um den Sperrbolzen (10) mit einer ersten Federkraft (K1) aus der Entriegelungsposition (EP) in die Verriegelungsposition (VP) zu beaufschlagen.

5. Vorrichtung (100) nach einem der vorhergehenden Ansprüche,
**dadurch gekennzeichnet,**
**dass** die Detektionseinheit (30) ein zweites Federelement (34) aufweist, um den Steuerhebel (31) mit einer zweiten Federkraft (K2) aus der Funktionsstellung (FS) in die Detektionsstellung (DS) zu beaufschlagen,
wobei insbesondere das Federelement (34) in einer ersten Führung (F1) in einem Gehäuse (101) der Vorrichtung (100) angeordnet ist,
wobei vorzugsweise das Federelement (34) zwischen einem Federhalter (31f) am Steuerhebel (31) und einem Anschlag (A1) in und/oder an einer ersten Führung (F1) in einem Gehäuse (101) der Vorrichtung (100) angeordnet ist.

6. Vorrichtung (100) nach einem der vorhergehenden Ansprüche,
**dadurch gekennzeichnet,**
**dass** der Steuerhebel (31) translatorisch, vorzugsweise entlang einer Richtung (Q), die sich im Wesentlichen quer zu einer Hubrichtung (H) des Sperrbolzens (10) erstreckt, bewegbar gelagert ist,
und/oder dass der Steuerhebel (31), insbesondere ein Federhalter (31f) des Steuerhebels (31), entlang einer ersten Führung (F1) in einem Gehäuse (101) der Vorrichtung (100) bewegbar gelagert ist,
und/oder dass der Sicherungsschenkel (37), insbesondere ein Schenkelfuß (37f) des Sicherungsschenkels (37), entlang einer zweiten Führung (F2) in einem Gehäuse (101) der Vorrichtung (100) bewegbar gelagert ist.

7. Vorrichtung (100) nach einem der vorhergehenden Ansprüche,
**dadurch gekennzeichnet,**
**dass** der Steuerhebel (31) einen Führungsabschnitt (39) aufweist,
der dazu ausgeführt ist,
den Steuerhebel (31) bei der Bewegung zwischen der Funktionsstellung (FS) und der Detektionsstellung (DS) zu stabilisieren und/oder
den Sperrbolzen (10) in der Entriegelungsposition (EP) form- und/oder kraftschlüssig abzusichern,
und/oder dass der Führungsabschnitt (39) ein Sicherungselement (39a) aufweist,
der in der Funktionsstellung (FS) des Steuerhebels (31) sich beabstandet vom Sperrbolzen (10) befindet und
in der Detektionsstellung (DS) des Steuerhebels (31) in eine korrespondierende Halteausnehmung (12) am Sperrbolzen (10) form- und/oder kraftschlüssig eingreift.

8. Vorrichtung (100) nach einem der vorhergehenden Ansprüche,
**dadurch gekennzeichnet,**
**dass** der Führungsabschnitt (39) einen Führungspin (36) aufweist,
der in eine, vorzugsweise spiralförmig um eine Drehachse (D) des Getriebes (20) ausgebildete, Führungskulisse (24) an einem Antriebsrad (21) des Getriebes (20) eingreift,
um den Steuerhebel (31) zwischen der Funktionsstellung (FS) und der Detektionsstellung (DS), zu überführen,
und/oder dass der Führungsabschnitt (39) in einer dritten Führung (F3) in einem Gehäuse (101) der Vorrichtung (100) bewegbar gelagert ist,
und/oder dass der Führungsabschnitt (39) plateauförmig und/oder massiv ausgeführt ist,
und/oder dass der Führungsabschnitt (39) abgewinkelt vom Steuerhebel (31) ausgeführt ist,
und/oder dass der Führungsabschnitt (39) und der Steuerhebel (31) materialeinheitlich, monolithisch und/oder einstückig ausgeführt sind,
und/oder dass Führungsabschnitt (39) und der Steuerhebel (31) aus einem Kunststoff, insbesondere Duroplast, ausgeführt sind.

9. Vorrichtung (100) nach einem der vorhergehenden Ansprüche,
**dadurch gekennzeichnet,**
**dass** der Signalgeber (32) mindestens einen Permanentmagneten (M) mit einer magnetischen Orientierung, vorzugsweise drei Permanentmagneten mit alternierenden magnetischen Orientierungen, aufweist,
wobei das erste Sensorelement (33) insbesondere mindestens einen Magnetfeldsensor, bevorzugt Hallsensor, aufweist.

10. Vorrichtung (100) nach einem der vorhergehenden Ansprüche,
**dadurch gekennzeichnet,**
**dass** die Detektionseinheit (30) mindestens ein zweites ortsfestes Sensorelement (35) zum Detektieren mindestens einer weiteren Stellung (FS, DS) des Steuerhebels (31) aufweist,
wobei sich der Steuerhebel (31) insbesondere in der Funktionsstellung (FS) im Detektionsbereich des zweiten Sensorelementes (35) befindet,
wobei das zweite Sensorelement (35) vorzugsweise mindestens einen Magnetfeldsensor, bevorzugt einen Hallsensor, aufweist.

11. Vorrichtung (100) nach einem der vorhergehenden Ansprüche,
**dadurch gekennzeichnet,**
**dass** das Getriebe (20) ein Antriebsrad (21) zum Antreiben des Steuerhebels (31) und ein Schaltelement (22) zum Antreiben des Sperrbolzens (10) aufweist,
wobei insbesondere das Antriebsrad (21) form- und/oder kraftschlüssig mit dem Schaltelement (22) verbunden ist,
und/oder dass das Getriebe (20) ein, vorzugsweise drehbar um eine Drehachse (D) des Getriebes (20) angetriebenes, Schaltelement (22) mit einer, vorzugsweise wendelförmigen, Steuerkurve (23) aufweist,
welche mit einem korrespondierenden Steuermittel (11) des Sperrbolzens (10) zusammenwirkt,
um eine Rotationsbewegung des Schaltelementes (22) in eine translatorische Bewegung des Sperrbolzens (10) entlang einer Hubrichtung (H) zwischen der Verriegelungsposition (VP) und der Entriegelungsposition (EP) zu transformieren.

12. Vorrichtung (100) nach einem der vorhergehenden Ansprüche,
**dadurch gekennzeichnet,**
**dass** das Getriebe (20) ein Antriebsrad (21) mit einer, vorzugsweise spiralförmig um eine Drehachse (D) des Getriebes (20) ausgebildeten, Führungskulisse (24) aufweist, welche mit einem korrespondierenden Führungspin (36) des Steuerhebels (31) zusammenwirkt,
um eine Rotationsbewegung der Führungskulisse (24) in eine translatorische Bewegung des Steuerhebels (31) zwischen der Funktionsstellung (FS) und der Detektionsstellung (DS), vorzugsweise entlang einer Richtung (Q), die sich im Wesentlichen quer zu einer Hubrichtung (H) des Sperrbolzens (10) erstreckt, zu transformieren,
und/oder dass das Getriebe (20) einen Nachlauf für den Sperrbolzen (10) gegenüber dem Steuerhebel (31) beim Verlassen einer Position (VP, EP) und einen Vorlauf für den Sperrbolzen (10) gegenüber dem Steuerhebel (31) beim Erreichen einer Position (VP, EP) aufweist,
und/oder dass das Getriebe (20) insbesondere einen Vorlauf für den Steuerhebel (31) gegenüber dem Sperrbolzen (10) beim Verlassen einer Stellung (FS, DS) und einen Nachlauf für den Steuerhebel (31) gegenüber dem Sperrbolzen (10) beim Erreichen einer Stellung (FS, DS) aufweist,
und/oder dass das Getriebe (20) eine Steuerkurve (23) zum Antreiben des Sperrbolzens (10) und eine Führungskulisse (24) zum Antreiben des Steuerhebels (31) aufweist, wobei der Weg eines Steuermittels (11) des Sperrbolzens (10) entlang der Steuerkurve (23) kürzer ist als der Weg eines Führungspins (36) des Steuerhebels (31) entlang der Führungskulisse (24) .

13. Verfahren zum Antreiben einer Vorrichtung (100) zum Sperren und Freigeben eines funktionswesentlichen Bauteils eines Kraftfahrzeuges, insbesondere einer Lenksäule oder eines Gangschalthebels, die
- ein Gehäuse (101), in welchem:
- ein Sperrbolzen (10) zwischen einer Verriegelungsposition (VP), in welcher der Sperrbolzen (10) mit dem funktionswesentlichen Bauteil in Eingriff bringbar ist, und einer Entriegelungsposition (EP), in welcher der Sperrbolzen (10) das funktionswesentliche Bauteil freigibt, bewegbar gelagert ist,
- ein Getriebe (20),
welches mit dem Sperrbolzen (10) in einer mechanischen Wirkverbindung steht, um den Sperrbolzen (10) zwischen der Verriegelungsposition (VP) und der Entriegelungsposition (EP) zu überführen,
- und eine Detektionseinheit (30),
welche einen Steuerhebel (31) zum Bewegen eines Signalgebers (32) und mindestens ein erstes ortsfestes Sensorelement (33) zum Detektieren mindestens einer Stellung (FS, DS) des Steuerhebels (31) aufweist,
wobei der Steuerhebel (31) in dem Gehäuse (101) zwischen einer Funktionsstellung (FS), in welcher sich der Signalgeber (32) beabstandet vom ersten Sensorelement (33) befindet, und einer Detektionsstellung (DS), in welcher sich der Signalgeber (32) im Detektionsbereich des ersten Sensorelementes (33) befindet, bewegbar gelagert ist,
und wobei das Getriebe (20) mit dem Steuerhebel (31) in einer mechanischen Wirkverbindung steht, um den Steuerhebel (31) zwischen der Funktionsstellung (FS) und der Detektionsstellung (DS) zu überführen,
**dadurch gekennzeichnet,**
**dass** der Sperrbolzen (10) in der Funktionsstellung (FS) des Steuerhebels (31) durch einen Sicherungsschenkel (37) des Steuerhebels (31), insbesondere durch einen Form- und/oder Kraftschluss mit dem Sperrbolzen (10), abgesichert wird, um eine unberechtigte Überführung des Sperrbolzens (10) in die Entriegelungsposition (EP) zu verhindern,
und **dass** das Verfahren zum Antreiben einer Vorrichtung (100) nach einem der vorhergehenden Ansprüche ausgeführt wird.

## Claims

1. Device (100) for locking and releasing a functionally essential component of a motor vehicle, in particular a steering column or a gear shift lever, comprising:
- a housing (101) in which:
- a locking bolt (10) is movably mounted between a locking position (VP), in which the locking bolt (10) can be brought into engagement with the functionally essential component, and an unlocking position (EP), in which the locking bolt (10) releases the functionally essential component,
- a transmission (20),
which is mechanically connected to the locking bolt (10),
to move the locking bolt (10) between the locking position (VP) and the unlocking position (EP),
- and a detection unit (30), which has a control lever (31) for moving a signal transmitter (32) and at least one first stationary sensor element (33) for detecting at least one position (FS, DS) of the control lever (31),
wherein the control lever (31) is mounted in the housing (101) so as to be movable between a functional position (FS), in which the signal transmitter (32) is located at a distance from the first sensor element (33), and a detection position (DS), in which the signal transmitter (32) is located in the detection range of the first sensor element (33), and wherein the transmission (20) is in a mechanical operative connection with the control lever (31) in order to transfer the control lever (31) between the functional position (FS) and the detection position (DS),
**characterized in that,**
the control lever (31) has a securing limb (37) which, in the functional position (FS) of the control lever (31), is designed to prevent unauthorized transfer of the locking bolt (10) into the unlocking position (EP), in particular by a positive and/or frictional connection with the locking bolt (10),and **in that** the securing limb (37) has a locking section (38),
wherein the locking section (38) in the detection position (DS) of the control lever (31) is located at a distance from the locking bolt (10) and
wherein the locking section (38) in the functional position (FS) of the control lever (31) secures the locking bolt (10) in the locking position (VP) against being moved into the unlocking position (EP), and
positively and/or non-positively locks the locking bolt (10) in an intermediate position (ZP), which lies between the locking position (VP) and the unlocking position (EP) shortly before the locking position (VP) is reached.

2. Device (100) according to claim 1,
**characterized in that**
the locking section (38) has a projecting nose (38a), in particular in the direction of the control lever (31),
and/or the locking section (38) can be brought to rest from above on a bearing surface (14) on the locking bolt (10), preferably flat, in the functional position (FS) of the control lever (31),
to positively and/or non-positively lock the locking bolt (10) in the intermediate position (ZP) in the locking position (VP) and/or
to prevent the locking bolt (10) from being forcibly moved from the locking position (VP) and/or from the intermediate position (ZP) into the unlocking position (EP),
and/or that the locking bolt (10) has a, in particular lowered, bearing surface (14) for the locking section (38).

3. Device (100) according to one of the preceding claims,
**characterized in that**
the securing limb (37) is designed as an extension of the control lever (31),
and/or that the securing limb (37) and the control lever (31) are made of the same material, monolithic and/or in one piece,
and/or that the securing limb (37) and the control lever (31) are made of a plastic, in particular thermoset,
and/or that the securing limb (37) and the control lever (31) form a U-shaped component, and/or that the securing limb (37) extends essentially parallel to the control lever (31),
wherein in particular the locking section (38) projects from the securing limb (37) in the direction of the control lever (31),
and/or that the securing limb (37) and the control lever (31) enclose the locking bolt (10) on both sides at least in the locking position (VP) of the locking bolt (10).

4. Device (100) according to one of the preceding claims,
**characterized in that**
a first spring element (103) is provided in order to apply a first spring force (K1) to the locking bolt (10) from the unlocking position (EP) into the locking position (VP).

5. Device (100) according to one of the preceding claims,
**characterized in that**
the detection unit (30) has a second spring element (34) in order to apply a second spring force (K2) to the control lever (31) from the functional position (FS) into the detection position (DS),
wherein in particular the spring element (34) is arranged in a first guide (F1) in a housing (101) of the device (100),
wherein the spring element (34) is preferably arranged between a spring holder (31f) on the control lever (31) and a stop (A1) in and/or on a first guide (F1) in a housing (101) of the device (100).

6. Device (100) according to one of the preceding claims,
**characterized in that**
the control lever (31) is mounted so as to be movable in translation, preferably along a direction (Q) which extends substantially transversely to a stroke direction (H) of the locking bolt (10),
and/or **in that** the control lever (31), in particular a spring holder (31f) of the control lever (31), is mounted movably along a first guide (F1) in a housing (101) of the device (100),
and/or **in that** the securing limb (37), in particular a leg foot (37f) of the securing limb (37), is mounted movably along a second guide (F2) in a housing (101) of the device (100).

7. Device (100) according to one of the preceding claims,
**characterized in that**
the control lever (31) has a guide section (39),
which is designed for this purpose,
to stabilize the control lever (31) during the movement between the functional position (FS) and the detection position (DS) and/or
positively and/or non-positively secure the locking bolt (10) in the unlocking position (EP), and/or that the guide section (39) has a securing element (39a),
which, in the functional position (FS) of the control lever (31), is at a distance from the locking bolt (10), and
in the detection position (DS) of the control lever (31) engages positively and/or non-positively in a corresponding retaining recess (12) on the locking bolt (10).

8. Device (100) according to one of the preceding claims,
**characterized in that**
the guide section (39) has a guide pin (36),
which engages in a guide slot (24), preferably formed in a spiral around an axis of rotation (D) of the transmission (20), on a drive wheel (21) of the transmission (20),
to move the control lever (31) between the functional position (FS) and the detection position (DS),
and/or that the guide section (39) is movably mounted in a third guide (F3) in a housing (101) of the device (100),
and/or that the guide section (39) is plate-shaped and/or solid,
and/or that the guide section (39) is angled away from the control lever (31),
and/or that the guide section (39) and the control lever (31) are made of the same material, monolithic and/or in one piece,
and/or that the guide section (39) and the control lever (31) are made of a plastic, in particular thermoset.

9. Device (100) according to one of the preceding claims,
**characterized in that**
the signal transmitter (32) has at least one permanent magnet (M) with a magnetic orientation, preferably three permanent magnets with alternating magnetic orientations,
wherein the first sensor element (33) has, in particular, at least one magnetic field sensor, preferably a Hall sensor.

10. Device (100) according to one of the preceding claims,
**characterized in that**
the detection unit (30) has at least one second stationary sensor element (35) for detecting at least one further position (FS, DS) of the control lever (31),
wherein the control lever (31) is located in the detection range of the second sensor element (35), in particular in the functional position (FS),
wherein the second sensor element (35) preferably comprises at least one magnetic field sensor, preferably a Hall sensor.

11. Device (100) according to one of the preceding claims,
**characterized in that**
the transmission (20) has a drive wheel (21) for driving the control lever (31) and a shift element (22) for driving the locking bolt (10),
wherein in particular the drive wheel (21) is positively and/or non-positively connected to the shift element (22),
and/or **in that** the transmission (20) has a shift element (22), preferably rotatably driven about an axis of rotation (D) of the transmission (20), with a, preferably helical, control cam (23),
which interacts with a corresponding control means (11) of the locking bolt (10),
in order to transform a rotational movement of the shift element (22) into a translational movement of the locking bolt (10) along a stroke direction (H) between the locking position (VP) and the unlocking position (EP).

12. Device (100) according to one of the preceding claims,
**characterized in that**
the transmission (20) has a drive wheel (21) with a guide slot (24), preferably formed in a spiral around an axis of rotation (D) of the transmission (20),
which interacts with a corresponding guide pin (36) of the control lever (31),
in order to transform a rotational movement of the guide slot (24) into a translational movement of the control lever (31) between the functional position (FS) and the detection position (DS), preferably along a direction (Q) which extends essentially transversely to a stroke direction (H) of the locking bolt (10),
and/or that the transmission (20) has an overtravel for the locking bolt (10) relative to the control lever (31) when leaving a position (VP, EP) and an overtravel for the locking bolt (10) relative to the control lever (31) when reaching a position (VP, EP),
and/or **in that** the transmission (20) has, in particular, an advance travel for the control lever (31) relative to the locking bolt (10) when leaving a position (FS, DS) and an overtravel for the control lever (31) relative to the locking bolt (10) when reaching a position (FS, DS),
and/or **in that** the transmission (20) has a control cam (23) for driving the locking bolt (10) and a guide slot (24) for driving the control lever (31), the path of a control means (11) of the locking bolt (10) along the control cam (23) being shorter than the path of a guide pin (36) of the control lever (31) along the guide slot (24).

13. Method for driving a device (100) for locking and releasing a functionally essential component of a motor vehicle, in particular a steering column or a gear shift lever, which
- a housing (101) in which:
- a locking bolt (10) is movably mounted between a locking position (VP), in which the locking bolt (10) can be brought into engagement with the functionally essential component, and an unlocking position (EP), in which the locking bolt (10) releases the functionally essential component,
- a transmission (20),
which is mechanically connected to the locking bolt (10),
to move the locking bolt (10) between the locking position (VP) and the unlocking position (EP),
- and a detection unit (30),
which has a control lever (31) for moving a signal transmitter (32) and
has at least one first stationary sensor element (33) for detecting at least one position (FS, DS) of the control lever (31),
wherein the control lever (31) is mounted in the housing (101) so as to be movable between a functional position (FS), in which the signal transmitter (32) is located at a distance from the first sensor element (33), and a detection position (DS), in which the signal transmitter (32) is located in the detection range of the first sensor element (33), and wherein the transmission (20) is in a mechanical operative connection with the control lever (31) in order to transfer the control lever (31) between the functional position (FS) and the detection position (DS),
**characterized in that,**
the locking bolt (10) is secured in the functional position (FS) of the control lever (31) by a securing limb (37) of the control lever (31), in particular by a positive and/or frictional connection with the locking bolt (10), in order to prevent unauthorized transfer of the locking bolt (10) into the unlocking position (EP),
and **in that** the method for driving a device (100) is carried out according to one of the preceding claims.

## Revendications

1. Dispositif (100) de blocage et de déblocage d'un composant essentiel à la fonction d'un véhicule automobile, en particulier d'une colonne de direction ou d'un levier de changement de vitesse, présentant :
- un boîtier (101) dans lequel
- un boulon de blocage (10) est monté de manière mobile entre une position de verrouillage (VP), dans laquelle le boulon de blocage (10) peut être mis en prise avec le composant essentiel à la fonction, et une position de déverrouillage (EP), dans laquelle le boulon de blocage (10) libère le composant essentiel à la fonction,
- une transmission (20),
qui est en liaison active mécanique avec le boulon de blocage (10),
pour transférer le boulon de blocage (10) entre la position de verrouillage (VP) et la position de déverrouillage (EP),
- et une unité de détection (30) qui présente un levier de commande (31) pour déplacer un générateur de signaux (32) et au moins un premier élément de détection fixe (33) pour détecter au moins une position (FS, DS) du levier de commande (31),
le levier de commande (31) étant monté mobile dans le boîtier (101) entre une position de fonctionnement (FS), dans laquelle le générateur de signaux (32) se trouve à distance du premier élément de détection (33), et une position de détection (DS), dans laquelle le générateur de signaux (32) se trouve dans la zone de détection du premier élément de détection (33),
et dans lequel la transmission (20) est en liaison active mécanique avec le levier de commande (31) pour transférer le levier de commande (31) entre la position de fonctionnement (FS) et la position de détection (DS),
**caractérisé en ce que,**
le levier de commande (31) présente une branche de sécurité (37) qui est réalisée pour empêcher, dans la position de fonctionnement (FS) du levier de commande (31), un transfert non autorisé du boulon de blocage (10) dans la position de déverrouillage (EP), en particulier par une liaison par la forme et/ou par la force avec le boulon de blocage (10), et **en ce que** la branche de sécurité (37) présente une section de blocage (38),
la section de blocage (38) dans la position de détection (DS) du levier de commande (31), se trouve à distance du boulon de blocage (10) et
la section de blocage (38) dans la position de fonctionnement (FS) du levier de commande (31), empêche le boulon de blocage (10) dans la position de verrouillage (VP) d'être transféré dans la position de déverrouillage (EP) et
bloque le boulon de blocage (10) par complémentarité de forme et/ou de force dans une position intermédiaire (ZP) qui se situe entre la position de verrouillage (VP) et la position de déverrouillage (EP) juste avant d'atteindre la position de verrouillage (VP).

2. Dispositif (100) selon la revendication 1,
**caractérisé en ce que**
la section de blocage (38) présente un ergot (38a) faisant saillie, en particulier en direction du levier de commande (31),
et/ou **en ce que** la section de blocage (38) peut être amené en appui, de préférence à plat, par le haut sur une surface d'appui (14) sur le boulon de blocage (10) dans la position de fonctionnement (FS) du levier de commande (31),
pour bloquer le boulon de blocage (10) dans la position intermédiaire (ZP) dans la position de verrouillage (VP) par complémentarité de forme et/ou de force et/ou
pour empêcher un transfert forcé du boulon de blocage (10) de la position de verrouillage (VP) et/ou de la position intermédiaire (ZP) à la position de déverrouillage (EP),
et/ou **en ce que** le boulon de blocage (10) présente une surface d'appui (14), en particulier abaissée, pour la section de blocage (38).

3. Dispositif (100) selon l'une des revendications précédentes,
**caractérisé en ce que**
la branche de sécurité (37) est réalisée sous la forme d'un prolongement du levier de commande (31),
et/ou **en ce que** la branche de sécurité (37) et le levier de commande (31) sont réalisés en une seule matière, de manière monolithique et/ou en une seule pièce,
et/ou **en ce que** la branche de sécurité (37) et le levier de commande (31) sont réalisés en une matière plastique, en particulier en thermodurcissable,
et/ou **en ce que** la branche de sécurité (37) et le levier de commande (31) forment une pièce en forme de U,
et/ou **en ce que** la branche de sécurité (37) s'étend sensiblement parallèlement au levier de commande (31),
dans lequel, en particulier, la section de blocage (38) fait saillie de la branche de sécurité (37) en direction du levier de commande (31),
et/ou **en ce que** la branche de sécurité (37) et le levier de commande (31) entourent des deux côtés le boulon de blocage (10) au moins dans la position de verrouillage (VP) du boulon de blocage (10).

4. Dispositif (100) selon l'une des revendications précédentes,
**caractérisé en ce qu'**
un premier élément de ressort (103) est prévu pour solliciter le boulon de blocage (10) avec une première force de ressort (K1) de la position de déverrouillage (EP) à la position de verrouillage (VP).

5. Dispositif (100) selon l'une des revendications précédentes,
**caractérisé en ce que**
l'unité de détection (30) présente un deuxième élément de ressort (34) pour solliciter le levier de commande (31) avec une deuxième force de ressort (K2) de la position de fonctionnement (FS) à la position de détection (DS),
dans lequel, en particulier, l'élément de ressort (34) est disposé dans un premier guide (F1) dans un boîtier (101) du dispositif (100),
dans lequel, de préférence, l'élément de ressort (34) est disposé entre un support de ressort (31f) sur le levier de commande (31) et une butée (A1) dans et/ou sur un premier guide (F1) dans un boîtier (101) du dispositif (100).

6. Dispositif (100) selon l'une des revendications précédentes,
**caractérisé en ce que**
le levier de commande (31) est monté mobile en translation, de préférence le long d'une direction (Q) qui s'étend sensiblement transversalement à une direction de course (H) du boulon de blocage (10),
et/ou **en ce que** le levier de commande (31), en particulier un support de ressort (31f) du levier de commande (31), est logé de manière mobile le long d'un premier guide (F1) dans un boîtier (101) du dispositif (100),
et/ou **en ce que** la branche de sécurité (37), en particulier un pied de branche (37f) de la branche de sécurité (37), est logée de manière mobile le long d'un deuxième guidage (F2) dans un boîtier (101) du dispositif (100).

7. Dispositif (100) selon l'une des revendications précédentes,
**caractérisé en ce que**
le levier de commande (31) présente une section de guidage (39),
adaptée pour
stabiliser le levier de commande (31) lors du mouvement entre la position de fonctionnement (FS) et la position de détection (DS) et/ou
de bloquer le boulon de blocage (10) par complémentarité de forme et/ou de force dans la position de déverrouillage (EP),
et/ou **en ce que** la section de guidage (39) présente un élément de sécurité (39a),
qui, dans la position de fonctionnement (FS) du levier de commande (31), se trouve à une certaine distance du boulon de blocage (10) et
dans la position de détection (DS) du levier de commande (31), s'engage par complémentarité de forme et/ou de force dans un évidement de retenue (12) correspondant sur le boulon de blocage (10).

8. Dispositif (100) selon l'une des revendications précédentes,
**caractérisé en ce que**
la section de guidage (39) comprend une broche de guidage (36),
qui s'engage dans une coulisse de guidage (24), réalisée de préférence en forme de spirale autour d'un axe de rotation (D) de la transmission (20), sur une roue d'entraînement (21) de la transmission (20),
pour transférer le levier de commande (31) entre la position de fonctionnement (FS) et la position de détection (DS),
et/ou **en ce que** la section de guidage (39) est logée de manière mobile dans un troisième guidage (F3) dans un boîtier (101) du dispositif (100),
et/ou **en ce que** la section de guidage (39) est réalisée en forme de plateau et/ou massive,
et/ou **en ce que** la section de guidage (39) est réalisée de manière coudée par le levier de commande (31),
et/ou **en ce que** la section de guidage (39) et le levier de commande (31) sont réalisés en une seule matière, de manière monolithique et/ou en une seule pièce,
et/ou **en ce que** la section de guidage (39) et le levier de commande (31) sont réalisés en une matière plastique, en particulier en thermodurcissable.

9. Dispositif (100) selon l'une des revendications précédentes,
**caractérisé en ce que**
le générateur de signaux (32) présente au moins un aimant permanent (M) avec une orientation magnétique, de préférence trois aimants permanents avec des orientations magnétiques alternantes,
le premier élément de détection (33) présentant en particulier au moins un capteur de champ magnétique, de préférence un capteur à effet Hall.

10. Dispositif (100) selon l'une des revendications précédentes,
**caractérisé en ce que**
l'unité de détection (30) présente au moins un deuxième élément de détection fixe (35) pour détecter au moins une autre position (FS, DS) du levier de commande (31),
le levier de commande (31) se trouvant, en particulier dans la position de fonctionnement (FS), dans la zone de détection du deuxième élément de détection (35),
le deuxième élément de détection (35) présentant de préférence au moins un capteur de champ magnétique, de préférence un capteur à effet Hall.

11. Dispositif (100) selon l'une des revendications précédentes,
**caractérisé en ce que**
la transmission (20) présente une roue d'entraînement (21) pour l'entraînement du levier de commande (31) et un élément de commutation (22) pour l'entraînement du boulon de blocage (10),
la roue d'entraînement (21) étant notamment reliée par complémentarité de forme et/ou de force à l'élément de commutation (22),
et/ou **en ce que** la transmission (20) présente un élément de commutation (22), de préférence entraîné en rotation autour d'un axe de rotation (D) de la transmission (20), avec une came de commande (23), de préférence hélicoïdale,
qui coopère avec un moyen de commande correspondant (11) du boulon de blocage (10),
pour transformer un mouvement de rotation de l'élément de commutation (22) en un mouvement de translation du boulon de blocage (10) le long d'une direction de course (H) entre la position de verrouillage (VP) et la position de déverrouillage (EP).

12. Dispositif (100) selon l'une des revendications précédentes,
**caractérisé en ce que**
la transmission (20) présente une roue d'entraînement (21) avec une coulisse de guidage (24) réalisée de préférence en forme de spirale autour d'un axe de rotation (D) de la transmission (20),
qui coopère avec une broche de guidage correspondante (36) du levier de commande (31),
pour transformer un mouvement de rotation de la coulisse de guidage (24) en un mouvement de translation du levier de commande (31) entre la position de fonctionnement (FS) et la position de détection (DS), de préférence le long d'une direction (Q) qui s'étend sensiblement transversalement à une direction de course (H) du boulon de blocage (10),
et/ou **en ce que** la transmission (20) présente une course de poursuite pour le boulon de blocage (10) par rapport au levier de commande (31) lorsqu'il quitte une position (VP, EP) et une course d'avance pour le boulon de blocage (10) par rapport au levier de commande (31) lorsqu'il atteint une position (VP, EP),
et/ou **en ce que** la transmission (20) présente en particulier une course d'avance pour le levier de commande (31) par rapport au boulon de blocage (10) lorsqu'il quitte une position (FS, DS) et une course de retard pour le levier de commande (31) par rapport au boulon de blocage (10) lorsqu'il atteint une position (FS, DS),
et/ou **en ce que** la transmission (20) présente une came de commande (23) pour l'entraînement du boulon de blocage (10) et une coulisse de guidage (24) pour l'entraînement du levier de commande (31), la course d'un moyen de commande (11) du boulon de blocage (10) le long de la came de commande (23) étant plus courte que la course d'une broche de guidage (36) du levier de commande (31) le long de la coulisse de guidage (24).

13. Procédé d'entraînement d'un dispositif (100) de blocage et de déblocage d'un élément essentiel au fonctionnement d'un véhicule automobile, en particulier d'une colonne de direction ou d'un levier de changement de vitesse, qui
- un boîtier (101) dans lequel
- un boulon de blocage (10) est monté de manière mobile entre une position de verrouillage (VP), dans laquelle le boulon de blocage (10) peut être mis en prise avec le composant essentiel à la fonction, et une position de déverrouillage (EP), dans laquelle le boulon de blocage (10) libère le composant essentiel à la fonction,
- une transmission (20),
qui est en liaison active mécanique avec le boulon de blocage (10),
pour transférer le boulon de blocage (10) entre la position de verrouillage (VP) et la position de déverrouillage (EP),
- et une unité de détection (30),
qui comprend un levier de commande (31) pour déplacer un générateur de signaux (32) et
au moins un premier élément de détection fixe (33) pour détecter au moins une position (FS, DS) du levier de commande (31),
le levier de commande (31) étant monté mobile dans le boîtier (101) entre une position de fonctionnement (FS), dans laquelle le générateur de signaux (32) se trouve à distance du premier élément de détection (33), et une position de détection (DS), dans laquelle le générateur de signaux (32) se trouve dans la zone de détection du premier élément de détection (33),
et dans lequel la transmission (20) est en liaison active mécanique avec le levier de commande (31) pour transférer le levier de commande (31) entre la position de fonctionnement (FS) et la position de détection (DS),
**caractérisé en ce que,**
le boulon de blocage (10) est bloqué dans la position de fonctionnement (FS) du levier de commande (31) par une branche de sécurité (37) du levier de commande (31), en particulier par une liaison par la forme et/ou par la force avec le boulon de blocage (10), afin d'empêcher un transfert non autorisé du boulon de blocage (10) dans la position de déverrouillage (EP),
et **en ce que** le procédé d'entraînement d'un dispositif (100) est mis en oeuvre selon l'une des revendications précédentes.
